(19) Europäisches Patentamt
European Patent Office
Office européen des brevets

(11) **EP 2 027 559 B1**

(12) **EUROPEAN PATENT SPECIFICATION**

(45) Date of publication and mention
of the grant of the patent:
**23.05.2012 Bulletin 2012/21**

(51) Int Cl.:
**G06K 9/62** (2006.01)

(21) Application number: **07730004.4**

(22) Date of filing: **08.06.2007**

(86) International application number:
**PCT/EP2007/055646**

(87) International publication number:
**WO 2007/141325 (13.12.2007 Gazette 2007/50)**

(54) **METHOD OF PROCESSING MULTICHANNEL AND MULTIVARIATE SIGNALS AND METHOD OF CLASSIFYING SOURCES OF MULTICHANNEL AND MULTIVARIATE SIGNALS OPERATING ACCORDING TO SUCH PROCESSING METHOD**

VERFAHREN ZUM VERARBEITEN VON MEHRKANALWEGEN UND MEHRVARIABLENSIGNALEN UND VERFAHREN ZUM KLASSIFIZIEREN VON QUELLEN VON MEHRKANALIGEN UND MEHRVARIABLEN SIGNALEN, DAS GEMÄSS EINEM SOLCHEN VERARBEITUNGSVERFAHREN WIRKT

PROCEDE DE TRAITEMENT DE SIGNAUX MULTIVOIES ET MULTIVARIABLES ET PROCEDE DE CLASSIFICATION DE SOURCES DE SIGNAUX MULTIVOIES ET MULTIVARIABLES FONCTIONNANT SELON UN TEL PROCEDE DE TRAITEMENT

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **09.06.2006 EP 06115223**

(43) Date of publication of application:
**25.02.2009 Bulletin 2009/09**

(73) Proprietors:
• **Bracco S.P.A.**
**20134 Milano (IT)**
• **Semeion**
**00128 Roma (IT)**

(72) Inventor: **BUSCEMA, Paolo Massimo**
**I-00163 Roma (IT)**

(74) Representative: **Karaghiosoff, Giorgio Alessandro**
**Studio Karaghiosoff e Frizzi S.r.l.**
**Via F. Baracca 1R 4° piano**
**17100 Savona (IT)**

(56) References cited:
**EP-A- 0 433 626**

• LISZKA-HACKZELL J J: "Categorization of fetal rate patterns using neural networks" JOURNAL OF MEDICINAL CHEMISTRY, AMERICAN CHEMICAL SOCIETY. WASHINGTON, US, vol. 25, no. 4, 2001, pages 269-276, XP002401671 ISSN: 0022-2623
• GROSSI E ET AL: "The potential role played by artificial adaptive systems in enhancing our understanding of Alzeheimer disease: The experience gained within Italian Interdisciplinary Network on Alzheimer Disease" JOURNAL OF NEUROSCIENCE RESEARCH, WILEY-LISS, US, vol. 35, no. 3, 24 March 2005 (2005-03-24), pages 246-268, XP002401672 ISSN: 0360-4012
• ALGUINDIGUE I E ET AL: "Automatic fault recognition in mechanical components using coupled artificial neural networks" NEURAL NETWORKS, 1994. IEEE WORLD CONGRESS ON COMPUTATIONAL INTELLIGENCE., 1994 IEEE INTERNATIONAL CONFERENCE ON ORLANDO, FL, USA 27 JUNE-2 JULY 1994, NEW YORK, NY, USA,IEEE, 27 June 1994 (1994-06-27), pages 3312-3317, XP010127705 ISBN: 0-7803-1901-X
• VERONIS ET AL: "Signal classification and noise filtering using artificial neural networks" CANADIAN CONFERENCE ON ELECTRICAL AND COMPUTER ENGINEERING - CONGRES CANADIEN EN GENIE ELECTRIQUE ET INFORMATIQUE, XX, XX, vol. 1-2, 25 September 1991 (1991-09-25), pages 131-134, XP008069445

• EMILIANI G M M ET AL: "Automatic classification of EEGs with neural networks" JOURNAL OF MICROELECTRONIC SYSTEMS INTEGRATION, PLENUM PRESS, NEW YORK, NY, US, vol. 1, no. 1, March 1994 (1994-03), pages 41-62, XP008069493 ISSN: 1070-0056

**Description**

The invention relates to a method of processing a sequence of at least two or more multivariate signals coming from one source or object, wherein each signal is subjected to processing for classifying the signals according to a certain classification rule.

Such sequence of different signals are indicated in the present description and in the claims a multichannel signals, because normally the detection devices for the said signals is formed by a multichannel apparatus having a signal sensor or transducer for each on a certain number of selected channels of the measuring device.

Thus the invention deals specifically with a method for processing multichannel and multivariate signals

Generally, the said multichannel and multivariate signals are a set of signals from a single signal source or from a region comprising different signal sources interacting one with the other or being part of a network, and which signals are separately sensed for a predetermined identical duration, and vary with time.

Natural phenomena, such as physical, chemical, biophysical or biochemical phenomena are generally measured by using a plurality of sensors on signal sources which spontaneously generate said signals or are forced to generate signals, for instance during experiments.

For instance, in the field of physics, considering a region in space in which cosmic rays are to be measured, a number of sensors are used which are enabled to receive electromagnetic waves having different predetermined frequencies or frequencies within predetermined different frequency ranges. A further example consists in the study of high-energy particle collisions, for examination of elementary particles. Here again a number of sensors are provided, each adapted to sense an electromagnetic signal having a predetermined frequency and being sensed against time.

In the biophysical and particularly medical field, a set of multichannel or multivariate signals may consist of electroencephalogram patterns. In this case, several sensors, each receiving electromagnetic pulses from different areas of the brain provide time patterns of the electromagnetic activity of the corresponding area of the brain within the same time interval.

At present, multichannel and multivariate signals are examined assuming a coincidence in time of the effects indicated by the signals of each channel. These signals are interpreted by separately considering each time pattern of the signal of each channel and by comparing such patterns.

Nevertheless, in general, particularly for examination of complex phenomena, in which natural mechanisms are not wholly clear, this approach is an assumption that is not necessarily true and can lead to a misinterpretation of measured signals and of the natural mechanisms on which such natural mechanisms are based.

When these mechanisms are not known and the interactions between the causes of the signals from the different channels are also not known, then the assumption of a time coincidence is merely hypothetic.

Furthermore, when considering the measuring mechanism, it is obvious that nature does not generate signals specially construed to be sensed by the sensors used for sensing them, but sensors are external agents that explore natural events and the effect produced thereby.

On the basis of this principle, any processing of signals coming from an object and sensed on multiple different channels cannot be considered separately and the effect or process whereof information is to be extracted from the signals cannot be expected to be reconstructed from the sum of effects of separately processed channels, but the information in the signals of each channel are to be considered as a whole, which means that they are to be processed together. Therefore the natural process that associates the effects represented by the signals of each channel is substantially a sort of combinational asynchronous machine.

A significant practical example is given by the signals of an electroencephalogram, or EEG. A given number of probes is used to sense several different electromagnetic signals from a person, for a given period of time, each signal varying within said period of time and being registered on a channel. The signals come from different areas of the brain. The time offset between an action and a reaction of each area of the brain being monitored by the probes and which of said areas act on other areas are not known. Therefore, the assumption that a time coincidence or synchronism exists, for any moment in time, between the different signals of the channels is a rough simplification, having no scientific basis. A stricter hypothesis is the assumption that asynchronous relationships exist between the signals from the different channels and that information may be understood and extracted from the signals represented in the patterns of the EEG patterns, by processing all of the signals from all channels as a whole. This means that the EEG signals from all the channels being sensed or a portion thereof, have to be processed together.

Several different methods are known in the literature for processing EEG signals. These methods are based on processes of separate identification and extraction of the significant portions of the EEG signal of each channel. Once the significant portions of each signal have been detected, they are compressed and represented by indexes.

For instance, the document Multiresolution Wavelet Analysis of ERPs for the Detection of Alzheimer's Disease", Robi Polikar, Mary Helen Geer, Lalita Udpa, Fritz Keinert Proceedings -19th International Conference IEEE/EMBS Oct. 30-Nov-2,1997 Chicago, IL. USA, describes the use of Multiresolution Wavelet Analysis as a means to represent the information contained in EEG signals by using a small number of parameters. The parameters are used as records for representing each object for analysis by classification methods, such as processing by using predictive algorithms which provide a prediction on the pathologic conditions of the object.

The document "EEG filtering based on blind source separation (BSS) for early detection of Alzheimer's disease", Andrzej Cichocki, Sergei L. Shishkin, Tomshimitsu Misha, Zbigniew Loenowicz, Takashi Asada, Tayakoshi Kurachi, Clinical Neurophysiology xx(2004) 1-9, Elsevier Ireland Ltd. uses the filtering method called Blind Source Separation for processing the signals of the EEG channels.

The document "A method for detection of Alzheimer's disease using ICA-enhanced EEG measurements, Co Melissant, Alexander Ypma, Edward E.E: Friteman, Cornelis J. Stam, Artificial Intelligence in medicine (2005) 33, 209-22, describes a method of classification of patients according to whether they suffer or not from Alzheimer's disease, based on multichannel EEG signals. In this case, analysis of EEG signals is effected by using automatic pattern recognition techniques on the patterns from each EEG channel for classification. The signals from EEG channels are subjected to a pre-processing step by using the so-called Independent Component Analysis (ICA) method.

According to the above documents, the signals from each EEG channel are analyzed separately, the signal of each channel, i.e. the relevant information of said signal of each channel, being synthesized in a small number of indexes or parameters, which are in turn processed by using a predictive or classification algorithm.

Therefore, the invention is based on the problem of providing a method of processing multichannel and multivariate signals as described hereinbefore, which can overcome the limitations of prior art methods in which the signals from the various channels are processed separately and later related to each other on the basis of an assumption of synchronism therebetween.

The invention solves this problem by providing a method of processing multichannel and multivariate signals as described hereinbefore, wherein the signals from each channel are subjected to

A first processing step by a recirculation artificial neural network being trained to generate the recorded multichannel and multivariate signals;

And a second processing step in which the weights of the connections between the knots of the recirculation neural network determined in the first processing step are processed by an artificial neural network.

The recirculation neural network is preferably of the non supervised kind. A particular family of recirculation neural network which can be used according to the present invention is a so called auto-associative neural network.

Regarding auto-associative neural networks, see for instance: Reti Neurali Artificiali e Sistemi sociali Complessi Volume I- Teoria e Modelli, Massimo Buscema e Semeion Group, 1999 Franco Angeli S.r.l. Milano ISBN 88-464-1682-1 or Elements of Artificial Neural Networks, Kisham Mehrotra, Chilukukri K. Mohan, Sanjay Ranka, 1997 A Bradford Book, The Mit Press, ISBN 0-262-13328-8.

The document J. Liszka-Hackzell - "Categorization of Fetal Heart Rate Patterns Using Neural Networks", Journal of Medical Systems, Vol. 25, No. 4, pp. 269-276, 2001 discloses a method for fetal heart rate monitoring based on a self-organising map (SOM) neural network. The automatic diagnosis is implemented based on a hybrid network in which the input vectors used for categorization in the SOM network were input and compared in a second, back-propagation neural network.

The document Alguindigue et al. - "Automatic fault recognition of mechanical components using coupled artificial neural networks", IEEE World Congress on Computational Intelligence, IEEE International Conference on Neural Networks, 27-07-1994, Vol. 5, pp. 3312-3317 discloses monitoring the vibration of rolling element bearings based on an architecture with two neural networks: a first module using a recirculation neural network for feature extraction and compression of spectral features derived from the measurement signals and a second module which performs the actual discrimination of the faults using a back-propagation neural network. Unlike in the present invention, however, the second module does not use a matrix of weights of the connections between the knots of the recirculation neural network, but implements the fault detection by monitoring the vectors collected at the hidden layer of the recirculation neural network.

It will be appreciated that the use of a non linear auto-associative neural network to process the signals from the multichannel and multivariate signal

channels allows these signals to be processed together. The trained weight matrix so obtained represents information about the interactions between the channels.

Therefore, thanks to the inventive method, the signals from the various channels obtained from a source as defined above are processed together and processing does not involve extrapolation of separate relevant portions of the signals from the various channels, but synthesizes the process or event that generated the signals from the various channels as a whole by representing the interactions between the channels. Such synthesis is numerically represented by the trained weight matrix.

From the above it appears clearly that the core of the method is that the artificial neural networks (in the following indicate briefly as ANN) do not classify individuals by directly using the data consisting in the signals as an input. Rather, the data inputs for the classification are the weights of the connections within a recirculation (non- supervised) ANN trained to generate the recorded signal data. These connection weights represent an optimal model of the peculiar spatial features of the Signal pattern. The final classification is based on these weights and is performed by a standard supervised ANN.

The method according to the present invention is therefore a method that tries to understand the implicit function in a multivariate data series by compressing the temporal sequence of data into spatial invariants.

This method is based on three general observations:

Any multivariate sequence of signals coming from the same source represents a non-synchronous temporal phenomenon: the behaviour of every channel is the synthesis of the influence of the other channels at previous but not identical times and in different quantities, and of its own activity at that moment. At the same times, the activity of every channel at a certain moment in time is going to influence the behaviour of the others at different times and in different quantities. Therefore, every multivariate sequence of signals coming from the same natural source is a complex asynchronous dynamic system, highly nonlinear, in which each channel's behaviour is understandable only in relation to all the others.

Given a multivariate sequence of signals generating from the same source, the implicit function defining said asynchronous process is the conversion of that same process into a complex hyper-surface, representing the interaction in time of all the channels' behaviour. The parameters of the said nonlinear function define a meta-pattern of interaction of all channels in time.

The n channels in a system for detecting or measuring time dependent multivariate signals represent a dynamic system characterised by asynchronous parallelism. The nonlinear implicit function that defines them as a whole represent a meta-pattern that translates into space (hyper-surface) that the interactions among all the channels create in time.

In accordance with a first feature of the invention, the auto-associative neural network has as many input nodes as channels and as many output nodes as channels.

Advantageously, a neural network known as Recirculation Neural Network, as described in greater detail in Reti Neurali Artificiali e Sistemi sociali Complessi Volume I- Teoria e Modelli, Massimo Buscema e Semeion Group, 1999 Franco Angeli S.r.l. Milano ISBN 88-464-1682-1, is used as a non linear auto-associative network.

Otherwise, a Multilayer Perceptron neural network may be also used, or any other non linear auto-associative neural network, whose trained weights represent the parameters that define the hypersurface of the trained records.

The auto-associative neural network has a single weight matrix and is trained in such a manner as to synthesize the parameters indicating how the channels have negotiated their interaction in parallel.

These parameters are described in the weight matrix, which is defined as a record corresponding to the object or to the source of the multichannel and multivariate signals processed by the auto-associative network.

In order that the signals from the multiple channels may be processed, such signals may be obviously sampled.

As a result of processing by an auto-associative neural network having as many input nodes as output nodes and channels, a weight matrix is provided with a smaller number of components as compared with the matrix formed by the sampled signals of all the channels. Considering a number m > 0 of channels, then in a New Recirculation auto-associative network, the weight matrix will have $m^2+2m$ components.

Considering, for instance, a source wherefrom signals are measured on 19 different channels, then the weight matrix will have 399 components.

When signals are to be sensed, for instance, in a time interval of 1 minute, at 128 MHz, then each channel will be represented by more than 7000 (7680) numerical values and the whole matrix defined by the channels in columns and by the numerical values of the signal samples will have more than 15,000 numerical values.

Besides allowing parallel signal processing through all the channels, the use of an auto-associative neural network has the secondary advantage of reducing, without compression, the data of the matrix that represents the record of each object or each source, and corresponding to the weight matrix, in addition to the main advantage, consisting in that this weight matrix represents the logic of interaction between the signals of the channels and therefore the physical or physiological entities related to each channel.

The interpretation of the weight matrix also allows to reconstruct in space and time the interactions between the physical entities related to the signals provided by the various channels, as shown in greater detail below.

The processing of multichannel and multivariate signals by an auto-associative network may be considered as the reconstruction of a hypersurface representing the interactions between the channels.

Due to the possibility that the noise component has not been completely removed during this first processing step, an additional processing step may be provided which consists in processing the weight matrix for each object or each source by using a second New Recirculation auto-associative neural network, to obtain a compression of input data, the network having in this case as many inputs as components of the weight matrix obtained from previous processing of the multichannel multivariate signals by an auto-associative neural network and fewer outputs, depending on the desired compression.

In greater detail, the steps of this method have the purpose of providing at least one object or one source adapted to generate several different time-dependent signals;

Sensing each of these signals on a separate channel and in the same time interval, having identical start and end times for all signals of all channels;

Sampling the signals of each channel and generating a data matrix in which each line corresponds to one of the channels and each column corresponds to the sampling value of the signal of each channel in the corresponding sampling interval;

Providing an auto-associative neural network having as many input nodes as output nodes;

Training the auto-associative neural network so that the weight matrix describes the hypersurface that synthesizes the interactions between the channels;

Associating the weight matrix so obtained as matrices of variables that characterize the object or the source, i.e. the records of the object or the source.

In accordance with a further improvement, this method includes the processing of the weight matrix obtained from parallel processing of the various channel signals of the object or source, by a compression algorithm to reduce the number of elements composing the weight matrix and further filtering the noise components still contained in the signal.

Such compression is advantageously obtained by processing the weight matrix by an auto-associative neural network having as many inputs as weight matrix components and fewer outputs than inputs.

A few additional steps may be required, such as a step in which the weight matrix is scaled in view of the above compression step. In this case, the scaling step may be performed by table and not by column only, due to the need of maintaining the relationships between the numerical values of the original weight matrix of the multivariate sequence whereof this matrix is a synthesis.

Therefore, as a further step, the weight matrix is used to generate a map of the interactions in space and time among the channels and the physical or physiological entities of the object or source which generated the signal of the corresponding channel.

The above compression phase has the purpose of eliminating noise.

If we indicate with:

$W_i$ = connection matrix of the i - th result of a measurement providing a sequence of signals on n channels;
$H_i$ = vector of the fundamental information contained in each $W_i$ matrix;
$\eta_i$ =superficial and noisy information as codfied by each $W_i$ matrix.

$$W_i = H_i + \eta_i$$

The $^H$ vector should, therefore, represent, for every measurement the set of parameters containing key information. To carry out this compression an Auto-Associative ANNs with hidden units was used, which is able to project each measurement's entire connection matrix into a much smaller space. Also in this case the Auto-Associative ANN can be a Multi layer Perceptron or the above mentioned and later nearer described New Recirculation Network.

The compression operation can therefore be summarized with the following steps:

$$W_{i_{j,k}} = G(Z(W_{i_{j,k}}, V^{[p-1]}), V^{[p]}) = G(H_{i_q}, V^{[p]}); \text{ dove } q \in \{1,2,...,S\}.$$

in which:

G0 = Implicit function of all connection matrices of the N measurements;
V[p] = Value matrix of the p-th inter layer of the ANN compressing the connection matrices;
Wijk = Trained connection matric of the i-th measurement used as the i-th Input Vector with C cardinality
Hiq = vedctor of the i-th Hidden layer with S cardinality of the trained ANN that compresses the i-th Wi matrix used as Input Vecor fo the i-th measurement. Z()= Non linear function to transfer the element j,k of the Wijk with C cardinality into Hiq with S cardinality, where S<<Ç;

Through this further transformation, every signal of each measurement has been translated into a dataset. In this new dataset, every measurement is represented as a fixed group of parameters which, as a whole, should define the invariant patterns of that quality or event represented by the set of multivariate and multichannel signals of the corresponding measurement..

The invention also relates to a method for classifying objects or sources of multichannel, multivariate signals as defined above, wherein the method includes the processing of these signals by a classification algorithm such as a supervised neural network, a clustering algorithm, or the like.

According to this invention, the classification method uses a database of objects or sources of multichannel and multivariate signals, whose classification according to predetermined qualities or characteristics is known;

The signals from the channels of said objects or said sources are subjected to a processing step as described above by using an auto-associative network and/or possibly also to a step of compression of the components of the weight matrix so obtained;

Transformation by alignment of the lines of the uncompressed or compressed weight matrix into a vector;

Parametrization of the known and predetermined quality or characteristic by using numerical values;

Training and testing of a predictive algorithm by imposition of the vector for representing the numerical values of the weight matrix, either uncompressed or compressed, as an input, and of the parameters for representing the known and predetermined quality of characteristic as an output of said predictive algorithm;

Detection of multichannel and multivariate signals of one or more additional objects or of one or more additional sources whereof the predetermined quality or characteristic is not known;

Processing of the signals from the channels for each object or each source by using an auto-associative neural network and determination of the weight matrix;

Possible compression of the number of numerical components of the weight matrix;

Transposition of the numerical values of the uncompressed or compressed vector-like weight matrix, by alignment of the lines of such matrix;

Processing of said vector-like uncompressed or compressed weight matrix by using the trained predictive algorithm to determine the predefined qualities or characteristics from the output parameters of said predictive algorithm provided by said processing.

Advantageously, a so-called supervised neural network is used as a predictive algorithm.

According to yet another feature of this invention, the method of processing multichannel and multivariate signals and the method of classifying sources of multichannel and multivariate signals operating according to said processing method as described above are applied to multichannel signals of electroencephalograms EEG for early diagnosis of Alzheimer's disease.

In this case, the objects are individual patients, each being subjected to encephalographic examination.

Encephalographic patterns of several different areas of the brain are detected for each object, separately on different channels, in the same time interval having the same start time and the same end time on all channels;

The signals of patterns are sampled, whereby a matrix is generated in which the lines are formed by the numerical channel sampling values;

Said data matrix is processed by an auto-associative neural network having as many input nodes and output nodes as there are channels, whereas the weight matrix obtained from such processing is used as a matrix of the records of each object;

Possibly but without limitation, the weight matrix for each object is further subjected to compression by using an auto-associative neural network having as many inputs as the elements of the weight matrix determined in the previous step, and fewer outputs.

By using an uncompressed weight matrix, a space-time map may be generated of the interactions among the areas of the brain associated to each channel;

Furthermore, to classify unknown objects according to the presence or absence of Alzheimer's disease, the invention includes the following steps:

Providing a database of known cases, comprising a predetermined number of objects whereof the pathologic Alzheimer's disease condition is known;

Subjecting each of said objects to encephalographic examination, and registering the signals of each channel of the electroencephalogram;

Processing said multichannel signals of the encephalogram for each object, as defined above, by sampling and processing them by an auto-associative neural network;

Using the weight matrix determined by said auto-associative weight matrix and possibly further compressed, and the parameters for representing the pathologic condition relative to the presence of Alzheimer's disease, to train a supervised neural network, by providing, as input data, the numerical values of the weight matrix, possibly compressed, or in a form in which the numerical components of said matrix are arranged in a vector-like form over a single line, and as output data of said supervised neural network, the parameters for representing the pathologic condition;

Classifying an object of unknown pathologic condition, by using said supervised neural network, which has been trained with the following steps:

Sensing the signals of the electroencephalogram channels for said object and constructing a data matrix formed by a single line per channel and by the corresponding sampled signal;

Determining the weight matrix of an auto-associative neural network having as many input nodes as output nodes and as channels;

Using such weight matrix, possibly further compressed relative to the numerical elements thereof, as a record representative of the object;

Transposing the numerical data of said weight matrix, possibly compressed, into a vector form, i.e. with all the lines into a single line;

Determining the output parameters of the classification supervised neural network and predicting the pathologic condition of the object, by providing said network with the numerical values of the possibly compressed weight matrix, transposed into vector form, as input data.

Further characteristics of the invention will form the subject of the dependent claims.

The characteristics of the invention and the advantages derived therefrom will appear more clearly from the following description of a few embodiments, with reference to the annexed drawings, in which:

Figure 1 diagrammatically shows an object or a source adapted to generate a set of multichannel and multivariate signals.

Figure 2 is a diagrammatic view of the principle of the inventive method.

Figure 3 shows the interpretation of the weight matrix determined by the auto-associative neural network for generating a space-time map of the interactions among phenomena or physical or physiological entities related to the signal channels.

Figure 4 is a schemnatic figure representing the first so called squashing phase of the method according to the present invention, in which by means of an Auto Associated Ann the multivariate and multichannel signals are represented by the connection matrix of the units of the said Ann.

Figure 5 to 8 illustrite schematically the structure of different specific examples of Auto-Associated Anns.

Figure 9 illustrate schematicaly the structure of a Auto Associated ANN having a hidden layer and used for carrying out an additional step of the method according to the presnet invention compressing the connection matrix data oand being equivalent to an oise reduction process.

Figure 10 diagrammatically illustrate the function of compression or noise reduction of the ANN according to figure 9.

Figure 11 illustrates a validation protocoll usde for validating the experimental results of the method of the present invention.

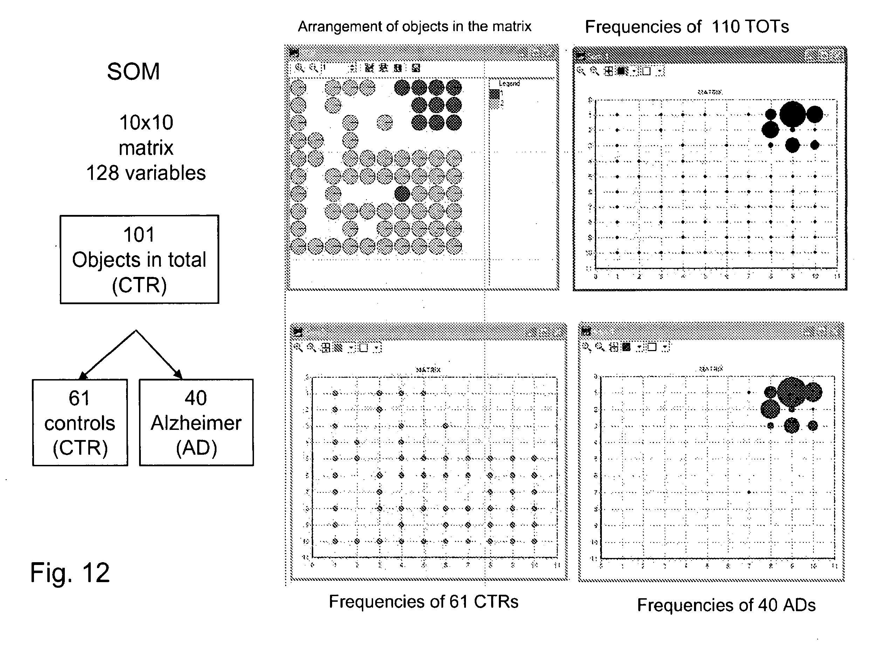

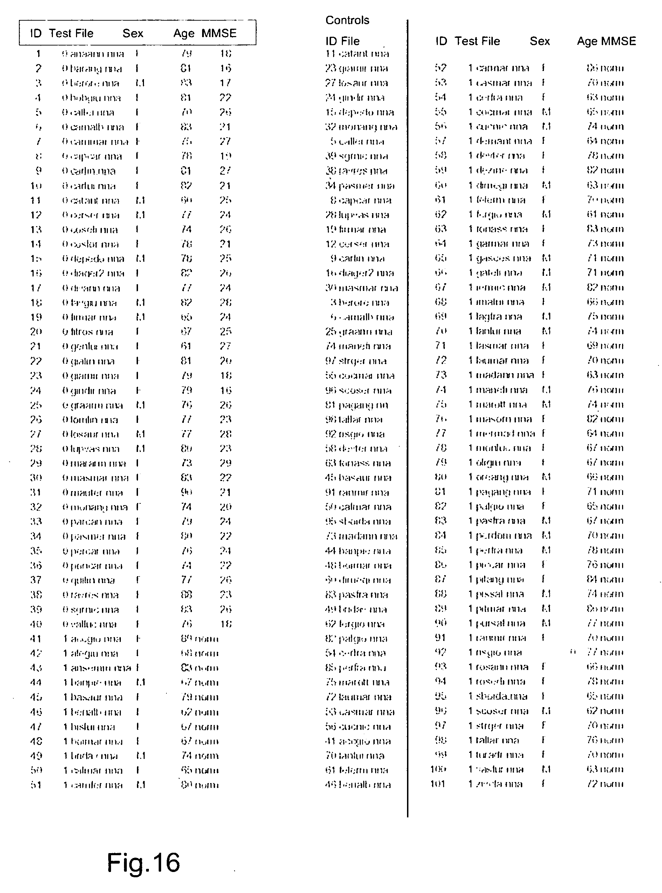

The table of Figure 12 shows an experimental test of the inventive method, in which the multichannel and multivariate signals of the database according to the table of Figure 16, which were processed with the inventive method, have been classified by a clustering algorithm of the type known as SOM. The figure shows the arrangement of the objects over the database matrix, the graphic representation of the frequencies of the 61 control objects, the graphic representation of the frequencies of the 40 individuals suffering from Alzheimer's disease, both separately and together in one graph.

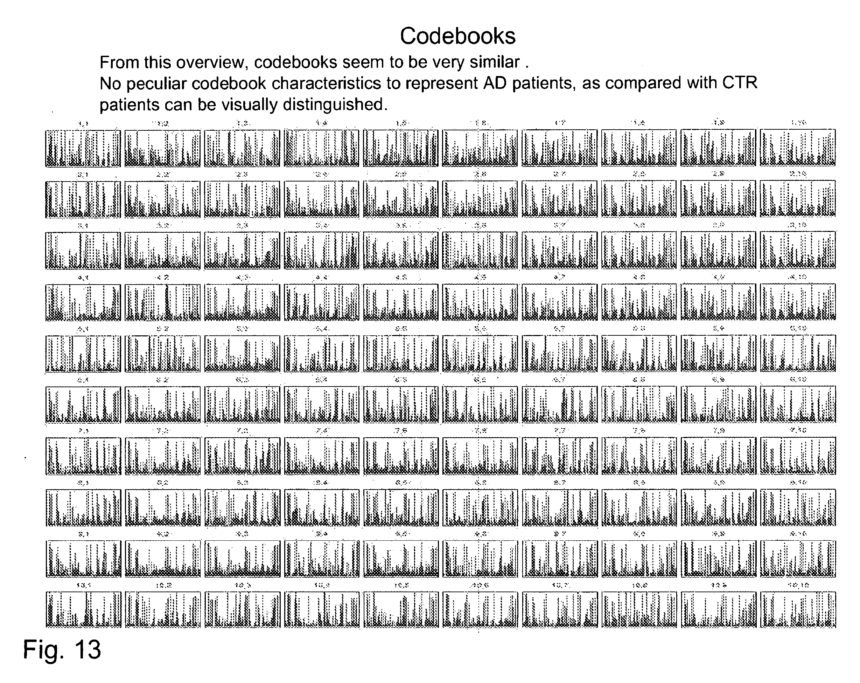

Figure 13 shows the 100 codebooks of the 10x10 matrix represented in the previous Figure, in the form of EEG patterns for each object.

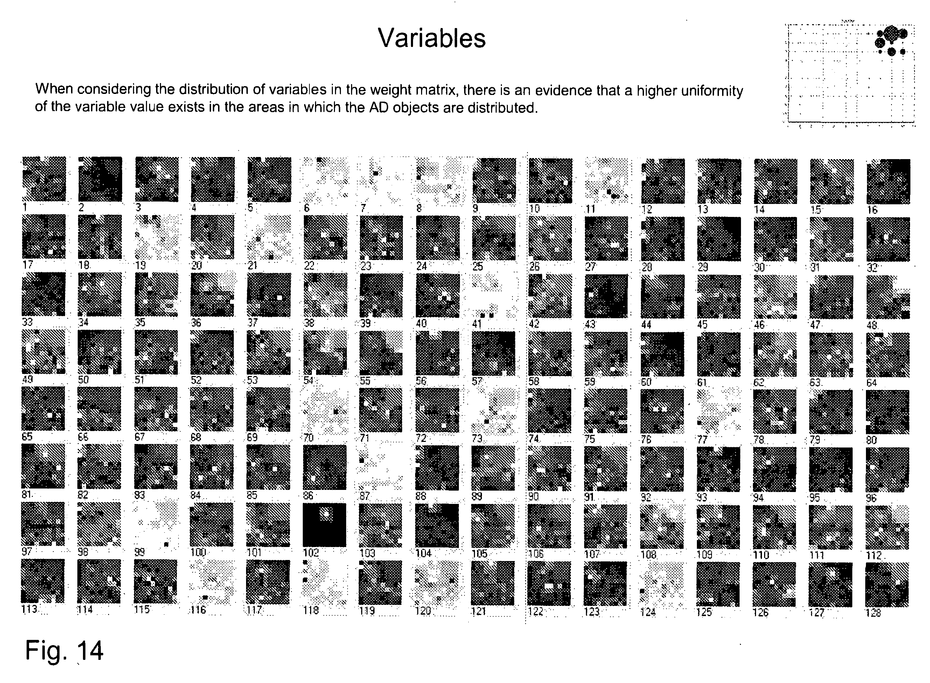

Figure 14 shows the arrangement of the variables in the weight matrix for the objects of the database described in the table of Figure 16.

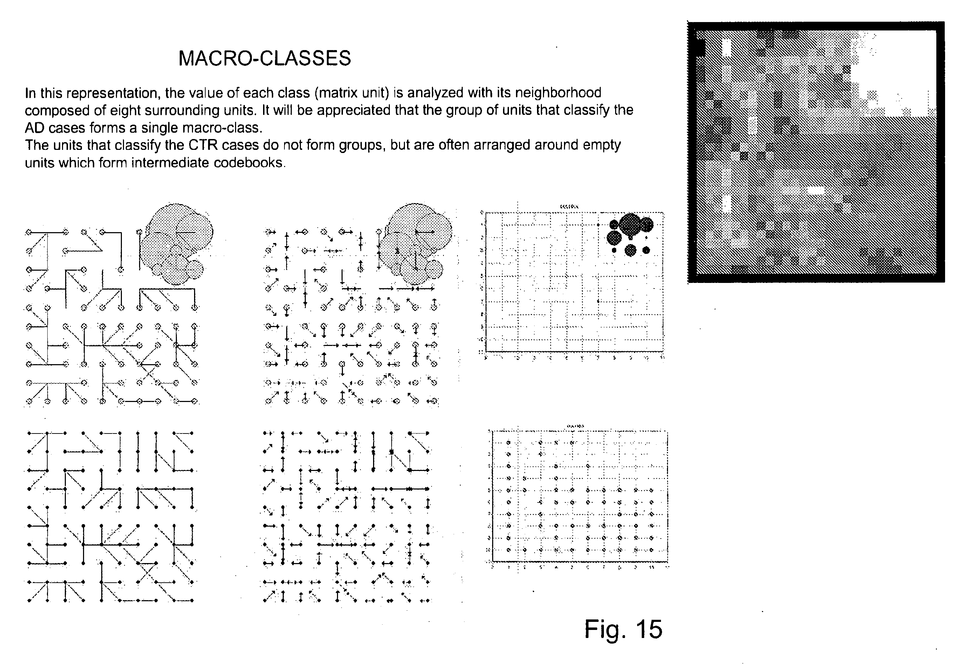

Figure 15 shows how each class (matrix unit) belongs to a macro-class with a neighborhood of eight surrounding units over the matrix.

Figure 16 shows database records of an experimental test, in which objects 1 to 101 are listed beside the file that contains the sampled patterns of the corresponding EEG, as well as the corresponding age, sex and minimental test values. A column also shows the objects that were used as controls of the predictive effectiveness.

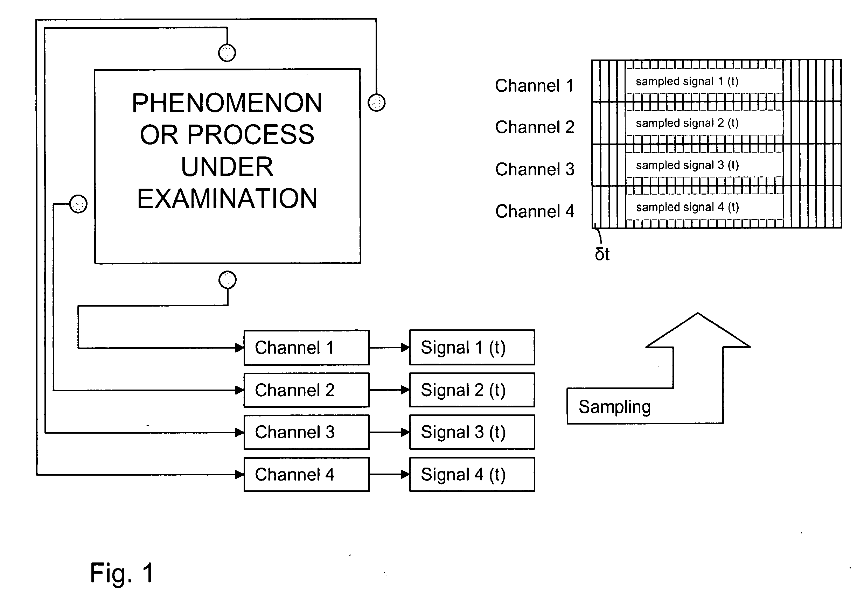

Referring to Figure 1, a very simplified diagram is shown which graphically represents the principle of the processing method of this invention and allows to uniquely define the concept of multichannel, multivariate signal.

Numeral 10 designates an object or a source that generates a plurality of signals within a time interval. The signals may differ one another, for instance, in that each signal is generated by a specific element or a specific component of the object and/or source, which is thus formed by a combination of elements or components. The diversification among the signals may be also given by a different arrangement in space of the sources with respect to the morphology of the object or source, which has a predetermined extension in space.

Obviously, the generation of different signals from different areas of the object or source may coincide with the fact that the different signals are generated by different specific elements or components of the object or source.

A further difference among the signals may be given, for instance, by different spectrum ranges in which a given sensor senses the signals generated by the object or source in a given time interval.

In short, the source or object spontaneously generates or is caused to generate signals, for which signals a diversification rule may be defined, and an association may be established to a separate and independent sensing channel.

It will be appreciated that, in the embodiment of the figure, a number of sensors are arranged in space along the perimeter of the phenomenon or process under examination, i.e. the object or source 10. Each sensor 11 is independent and connected to a separate channel 12. This schematic representation only relates to one example, which is provided to generally show the logic structure. Depending on the specific types of objects or sources, a single sensor may be also provided to detect a set of signals, e.g. a wideband sensor, which is able to sense all the signals transmitted by the object or source, the signals to be associated to each of the available channels being obtained, for instance, by a processing step in which these signals are separated from the wideband detection signal of the sensor. Therefore, for instance, when considering an electromagnetic wave sensor providing a sufficient linear response in a predetermined relatively wide frequency range, a separation of portions of said signals may be performed by filtering them through increasingly narrow frequency ranges, within said wide frequency range of the sensor, each separated signal of each narrower frequency range, being associated to a separate channel.

Therefore, the term "multichannel" as used herein relates to a signal from a subject or a source, which is composed of several components or parts that may be separated from one another and be processed separately, e.g. for storage or display thereof.

The word "multivariate" relates to the fact that the signals show variations in the time interval during which they have been sensed and that such variations may depend on phenomena relating to one signal from one channel and/or to interactions of the signals of two or more channels or the elements or processes which caused them to be generated.

Still according to this diagrammatic view, the different signals or portions of a composite or complex signal are separated from one other either directly upon sensing thereof (as shown) or in a later separation step and are uniquely associated to a separate channel, e.g. for storage, display and/or post-processing. Therefore a matrix will be obtained for each object or each source, which is composed of one column and as many lines as there are channels, the column showing the behavior of the signal of the corresponding channel during the sensing time interval, as designated by 13 in Figure 1.

A subsequent step, in which the signals from each channel are sampled, leads to the representation of each object or each source by means of a matrix in which each line, still associated to its channel, has the numerical signal sampling values for each successive sampling interval.

This matrix generally has a large number of elements. For example, considering an EEG (electroencephalogram) channel, whose signal has been registered for about one minute, and sampling this signal at about 128 MHz, then the line corresponding to the channel will have more than seven thousand numerical elements (7680). Now, considering that there may be about 19 channels, the matrix that represents the object or source will be composed of 145,920 numerical elements.

The data matrix so obtained is still difficult to interpret, as separate evaluation of data from each channel and later hypotheses of relationships among the channels cannot be based on the assumption that the signals from the channels are synchronous, i.e. that a variation in a signal within a given time interval or at a given moment derives from the variation of a signal from one or more of the other channels within the same time interval or at the same moment.

Such assumption of synchronism is contradicted by simple and evident arguments. When considering as a source, for example, a region in space in which several different spectral components of cosmic radiation are to be sensed over different channels, since the source is not uniquely defined and such radiation may be subjected to different effects during its propagation in space until it reaches the sensor/s, the assumption of synchronism is very restrictive and introduces a condition on the manners or mechanisms of interaction or non-interaction among the rays that have been sensed for each spectral range, therefore for each channel.

Similarly, considering as a source the electromagnetic pulses generated by particles obtained from inelastic collisions, e.g. high-energy collisions, some particles or radiations may, and often are, transmitted at times that do not coincide with the inelastic collision time, but after a predetermined delay.

Another example, which better shows that the hypothesis of synchronism among the phenomena described by the signals from the different channels is an apparent arbitrary restriction on the actual mechanisms of natural, physical or physiological processes, is given by the multichannel patterns of electroencephalograms. Here, the electromagnetic signals generated by different areas of the brain, and separately sensed on independent channels are indicators of cerebral activity in that area of the brain. However, the neurons and the areas of the brain continuously interact with one another with unknown delays. The assumption that any change in the pattern of a channel synchronously derives from signal changes in other channels involves the introduction of an at least partly false hypothesis in a mathematical evaluation or a mathematical model for evaluation of an object based on an electroencephalogram thereof.

Once the assumption of synchronism among the signals from all the channels is removed, i.e. when considering that these signals are asynchronous, then the object or source, as represented by all the signals from the channels, i.e.

by the matrix of sampled signals has to be considered as a combinatorial machine, whereby the signals have to be processed together in parallel.

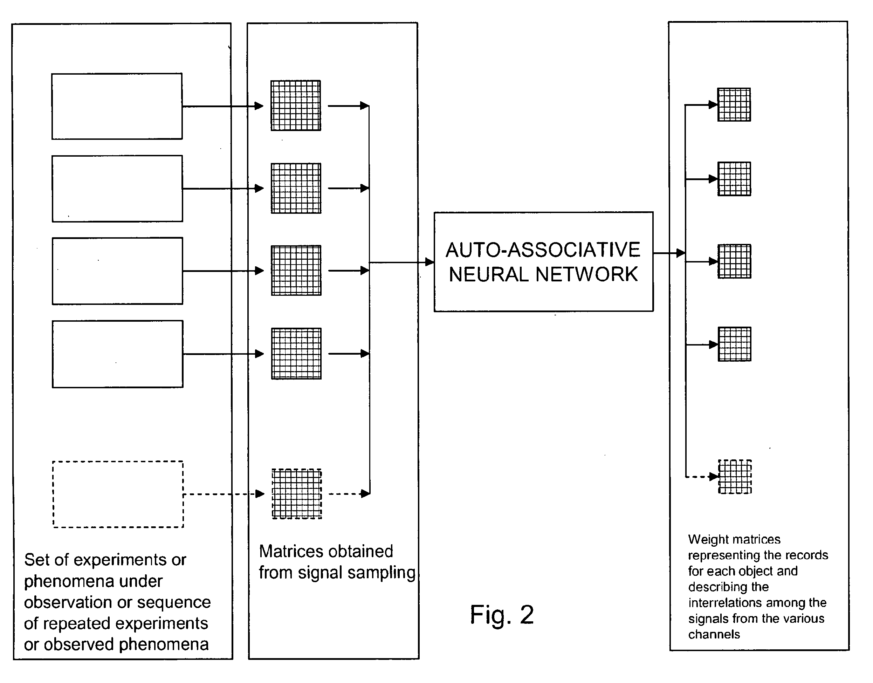

Figure 2 shows the method suggested by this invention. According to this method, the matrix of sampled signals 15 for each object or each source under examination is processed by an auto-associative neural network, which auto-associative neural network has as many input nodes and output nodes as channels. Current auto-associative neural network learning modes provide a weight matrix for each node of the network, to describe the interrelation among the various input values. The numerical data of the signals from each channel are processed simultaneously and in parallel for all channels, with no synchronism restriction. The auto-associative neural network generates a hypersurface by a highly non linear learning process, which represents the implicit function of interrelation among the input channels. The numerical representation of such hypersurface and of the implicit function of interrelation among the channels is given by the numerical values of the weight matrix generated by the auto-associative neural network applied to the matrix of the sampled signals of the various channels of each object or each source.

The theory of auto-associative neural networks further provides the number of weight matrix elements, which is determined by the number of input nodes, corresponding in this case to the number of output nodes and to the number of channels. Therefore, given a number of input nodes m, the number of weight matrix elements results from the expression $m^2 + 2m$. For instance, considering 20 channels, like in the above numerical example in which sampling of EEG signals resulted in more than 14,000 matrix elements, the weight matrix will have 440 elements wherefore, besides obtaining a description of the implicit function of interaction among the channels, each object or each source may be represented by a matrix having a dramatically smaller number of elements, and especially providing a numerical description of the implicit function of interaction among the channels, which has been extracted from the matrix of sampled signals of the various channels, after removal of noise information therefrom.

Figure 2 shows the implementation of such process to multichannel signals of multiple objects or multiple sources 10. These multiple objects or multiple sources may also consist of one object or one source which has been subjected to repeated signal detection, at different times, over the various channels, i.e. to multichannel signal detection. For instance, each object or each source may be given by an experiment repeated at different times.

The various objects or the various sources may be also provided by detections performed simultaneously in different regions in space.

For example, particularly referring to the biomedical field, the objects may be a number of patients screened for the presence of certain diseases.

A more specific example, which typically provides multichannel signals for several different objects, is given by the electroencephalographic examination of patients.

Here, by using a plurality of probes or electromagnetic sensors, each being associated to a separate channel and each being associated to a region of the brain, electromagnetic signals are being sensed, which are simultaneously generated by these different areas of the brain, i.e. in the same time interval, having a predetermined duration.

Each object, i.e. each patient will be uniquely associated to the set of EEG patterns that are stored in the form of time-dependent signals and each of these signals is uniquely associated to a different channel.

A database of this type, where the records of each object are represented in the form of a data matrix in which each line includes the EEG signal sampling value for one of the channels, has a very large number of values, which are strongly affected by noise signals.

Here the invention provides a processing step in which an auto-associative neural network as described above is used to process the matrix of signal sampling values for each channel and each object, thereby obtaining a weight matrix for each object, which weight matrix is used as a record for the corresponding object.

Thus, noise may be filtered out of the numerical values of the sampled signals for the various channels, which describe the implicit function of interaction among the channels, i.e. among the mechanisms represented by the channels, and the number of numerical values identifying each object is considerably reduced.

In the specific example of signals from EEG channels of different patients, the database that represents all the patients will have, as a record for each patient, the weight matrix provided by the auto-associative neural network.

As mentioned above, the weight matrix provided by the auto-associative neural network describes the implicit function of interaction among the channels and the entities represented by such channels. Particularly referring to the biomedical example of EEG patterns, since each channel is associated to a well defined area of the brain, the numerical values of the weight matrix may be interpreted to form a map of the space-time interactions among the different cerebral regions under examination.

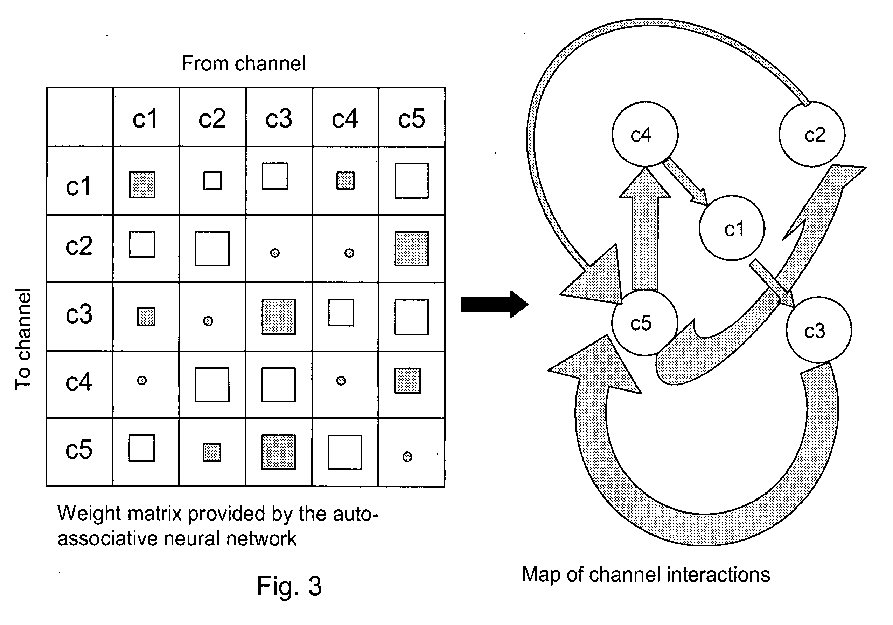

Figure 3 shows a hypothetical weight matrix obtained by the inventive method, and referring to 5 channels only. The matrix is represented by a 5 x 5 table, whose cells contain white or gray boxes of different sizes and grey dots. The grey boxes represent non-inhibitory or reinforcing interactions among the channels, whereas the white boxes represent inhibitory communications between two channels. The different sizes represent three different intensities, i.e. three different discrete absolute values of reinforcement or inhibition. The dots represent the lack of interaction, i.e. an interaction whose value is zero.

The channels are designated by C1, C2, C3, C4, C5 and in the biomedical example of an EEG examination, they represent for example five different areas of the brain.

From the above data matrix, a map may be formed in which the circles C1, C2, C3, C4, C5 represent the positions in space of the cerebral regions, in the biomedical example, or the entities or processes generating the signal of each channel. The arrows represent the interactions of interaction exchanges among the channels, only relating to weight matrix reinforcements. The width of these arrows is related to the size of the grey boxes that represent the absolute values in the three discrete intensity degrees of reinforcing, non-inhibitory interactions.

This map at least partly shows the mechanisms of interaction among the elements or processes that generate the signals from the various channels. In the specific case of electroencephalograms, the map highlights which area of the brain has interacted by a non-inhibitory signal with another area as well as the interaction intensity. A clearer overview is thus obtained of how the different areas of the brain have interacted, and of any abnormalities thereof.

The weight matrices obtained by using the method of this invention may thus be used as records for each object or for performing further processing steps, and particularly for classifying an object wherefor a set of signals was registered.

In this case, the first step consists in generating a database of objects or sources whose qualities or characteristics on which the classification has to be based are known. Therefore, for each object or each source, a set of signals, associated to the various channels, is registered and, after signal sampling, each object is processed by the auto-associative neural network, as shown in the diagram of Figure 2. The weight matrices obtained by such processing with the auto-associative neural network are used as records for each object, and a database is generated of objects or sources having known classification qualities of characteristics. In this case, the numerical values of the weight matrices are arranged in a vector-like form, i.e. in a single line, by transposing the lines of the weight matrix into a single line, i.e. the second line of the weight matrix after the first, the third line after the second, and so on.

The classification qualities or characteristics are turned into numerical parameters, which are adapted to uniquely identify these qualities or characteristics, e.g. the presence or absence thereof, or a certain amount of presence or absence thereof.

The above steps are also carried out for objects or sources whose classification qualities or characteristics are not known.

In order to ascertain the class whereto an object or a subject belong, any predictive algorithm may be used, e.g. a neural network.

In this case, learning in the neural network will be of the supervised type. Network learning will be performed with known methods, by providing, as an input to the network, the records of each of the objects of the database of known objects, which records are numerical values of the weight matrix that was determined in the previous step, as described above, and by providing, as an output to the network, the parameters that uniquely identify the known quality or characteristic of the corresponding object.

As a rule, the network is trained by only using some of the cases of the database, whereas the remaining cases are used for control. In the control stage, the database cases that are not used for training are passed to the trained neural network as an input without providing the output parameters, i.e. the parameters for uniquely identifying the classification qualities or characteristics that are known for these cases. The output parameters provided by the network for processing the inputs of the remaining cases, the so-called controls, are compared with the parameters for identifying the known classification qualities or characteristics of control cases to check the prediction or classification quality of the network, the so-called fitness.

Now, if fitness is satisfactory, then the network may be provided with the records for the objects or sources whose classification qualities or characteristics are not known.

If the above step is only executed to determine the records for the objects or sources of the signals over several channels as a weight matrix obtained by processing these signals by an auto-associative neural network according to this invention, noise may still exist in the numerical data of the weight matrix, therefore a further weight matrix filtering and compression step.

This step consists in using an auto-associative neural network once again, this time for compression. Such network will have as many inputs as weight matrix elements and fewer outputs than inputs.

Generally, the auto-associative neural network used for compression is structured in such a manner as to reduce the number of numerical data that form the records of the objects to about 1/3 of the original elements or even less.

In the following the method according to the present invention is nearer disclosed by means of a special example which helps in better and more precisely highlighting the practical aspects of the method.

This specific example consist in applying the method according to the present invention for carrying out a paralle analysis of EGG signals and distinguishing between normal non-impaired subjects, those with mild cognitive impairment, and Alzheimer's disease patients. The automatic classification of normal elderly (NOLD), mild cognitive impairment (MCI), and Alzheimer's disease (AD) subjects can be reasonably correct when the spatial content of the electroencephalographic (EEG) voltage is properly extracted by artificial neural networks (ANNs).

Resting eyes-closed EEG data were recorded (10-20 electrode system; common average reference; 128-Hz frequency sampling) from 19 channels in 171 healthy ageing volunteers (NOLD) (Mean MMSE =27.7); in 180 AD patients (Mean MMSE =19.9) and in 115 Mild cognitive impairment (MCI) subjects (Mean MMSE =25.2);

The spatial content of the EEG voltage (60 s) was extracted by the step-wise procedure according to the present invention. The core of the procedure was that the ANNs did not classify individuals by directly using the EEG data as an input. Rather, the data inputs for the classification were the weights of the connections within a recirculation (non-supervised) ANN trained to generate the recorded EEG data. These connection weights represented an optimal model of the peculiar spatial features of the EEG patterns at scalp surface. The classification based on these weight was binary (NOLD vs. MCI; MCI vs. AD) and was performed by a supervised ANN. Half of the EEG database was used for the ANN training and the remaining EEG database served for the automatic classification phase (testing).The best results distinguishing between AD and MCI and between MCI and NOLD were equal to 92.33% and to 93.46% respectively. The comparative results obtained with the best method so far described in the literature, based on blind source separation and Wavelet pre-processing, were 80.43% and 86.73% respectively ($p < 0.001$). These results confirmed the working hypothesis and represent the basis for research aimed at integrating spatial and temporal information content of the EEG.

As already said, the core of the procedure is that the ANNs do not classify individuals by directly using the EEG data as an input. Rather, the data inputs for the classification are the weights of the connections within a recirculation (non-supervised) ANN trained to generate the recorded EEG data. These connection weights represent an optimal model of the peculiar spatial features of the EEG patterns at the scalp surface. The final classification is based on these weights and is performed by a standard supervised ANN.

The method according to the present invention is a method, therefore, that tries to understand the implicit function in a multivariate data series by compressing the temporal sequence of data into spatial invariants.

This method is based on three general observations:

1. Any multivariate sequence of signals coming from the same source represents a non-synchronous temporal phenomenon: the behaviour of every channel is the synthesis of the influence of the other channels at previous but not identical times and in different quantities, and of its own activity at that moment. At the same times, the activity of every channel at a certain moment in time is going to influence the behaviour of the others at different times and in different quantities. Therefore, every multivariate sequence of signals coming from the same natural source is a complex asynchronous dynamic system, highly nonlinear, in which each channel's behaviour is understandable only in relation to all the others.

2. Given a multivariate sequence of signals generating from the same source, the implicit function defining said asynchronous process is the conversion of that same process into a complex hyper-surface, representing the interaction in time of all the channels' behaviour. The parameters of the said nonlinear function define a meta-pattern of interaction of all channels in time.

3. The 19 channels in the EEG represent a dynamic system characterised by asynchronous parallelism. The nonlinear implicit function that defines them as a whole represent a meta-pattern that translates into space (hyper-surface) that the interactions among all the channels create in time.

The idea underlying of the method according to the present invention resides in thinking that each patient's 19-channel EEG track can be synthesized by the connection parameters of an Auto-associated nonlinear ANN, previously trained about that same track's data.

There can be several topologies and learning algorithms for such ANNs. What is necessary is that the selected ANN be of the Auto-associated type (that is to say, that the Input vector be a target for the Output vector), and that the transfer functions defining it be nonlinear and differentiable at any point.

Furthermore, it is preferable that all the processing made on every patient be carried out with the same type of ANN, and that the initial randomly generated weights have to be the same in every learning trial. This means that, for every EEG, every ANN has to have the same starting point, even if that starting point is random.

Analyzing a patient's cognitive decline level on a patient means deciphering how well their brain works. Decoding this quality through the EEG track of a patient means to look into that track, that is variable over time on all channels, for those invariant patterns that characterize the functional health of that brain in that phase of its life.

The second main idea on which the method according to the present invention is based is that the quality of a brain's functioning can be decoded, on the basis of a good sample of its electric activity (EEG), through systems that can isolate the traits in the EEG that are invariant in relation to the track's time.

In this case it is preferable to use nonlinear Auto-Associated ANNs of the combinatorial and not of the sequential type in order to analyse the EEG.

In other words, the internal time of an EEG track is associated with the more or less free and/or random thoughts of every patient during the analysis. The patient's brain does not stop working when performing "with his/her eyes closed", and s/he is also self-aware. The time dynamic inside the signal is completely subjective. There is no interest in the patient's thought sequence at that moment. The "background noise" of his cognitive activity, fuzzily indicates his cerebral engine's health state. This cognitive quality should be invariant during the EEG, and the recorded electric activity should retain a trace of it.

The above does not mean that the EEG track does not have a temporal pertinence, only that to understand the functional health of a brain, time is only a constraint to the manifestation of a spatial invariant.

This invariant is not obviously an invariant, on different time scales a brain, during its lifespan, varies in cognitive quality, but this is a macroscopic time span compared to the microscopic time span (1 or 2 minutes) during which an EEG track is recorded (unless the patient experiences a violent ischemia while recording the track).

Every Auto-Associated ANN in the method according to the present invention has to register on its connections the invariant spatial patterns characterizing every patient in that phase of their life.

The first embodiment of the method according to the invention consists in the application phase tha may be defined as "squashing. : Indeed it consists in squashing and compressing an EEG track in order to project, on the connections of a nonlinear Auto-Associated ANN, the invariant patterns of that track.

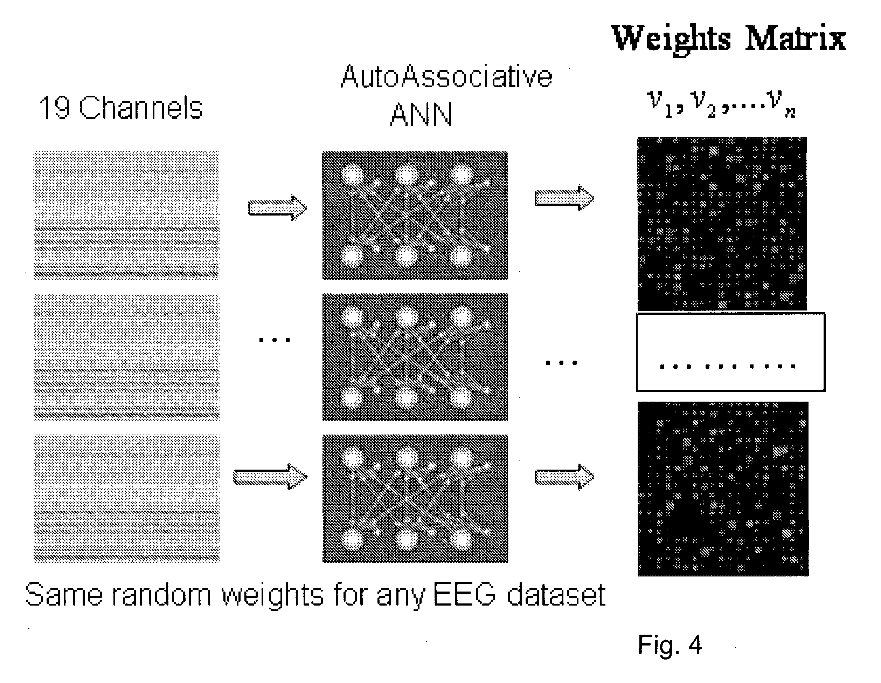

Considering an EEG track with 19 channels in standard position, and a sampling frequency of 128 Hz for about 60 seconds, the squashing phase may be represented as illustrated in figure 4. More formally the said squashing phase may be defined as:

If the following definitions are made

$F_i()$ = Implicit function of the ith EEG;
$X_i$ = Matrix of the values of the i - th EEG;

$W_{i_{j,k}}^*$ = Trained matrix of the connections of the i - th EEG (* = objective of the squashii

$W_{0_{j,k}}$ = Random starting matrix, the same for all EEGs;

Then, in the case of a two layered Auto-Associated:

$$X_i = F_i(X_i, W_{i_{j,k}}^*, W_{0_{j,k}}); \quad \text{con } W_{i_{j,i}} = 0.$$

It is possible to use different types of Auto-Associated ANNs to run this search for spatial invariants in every EEG.

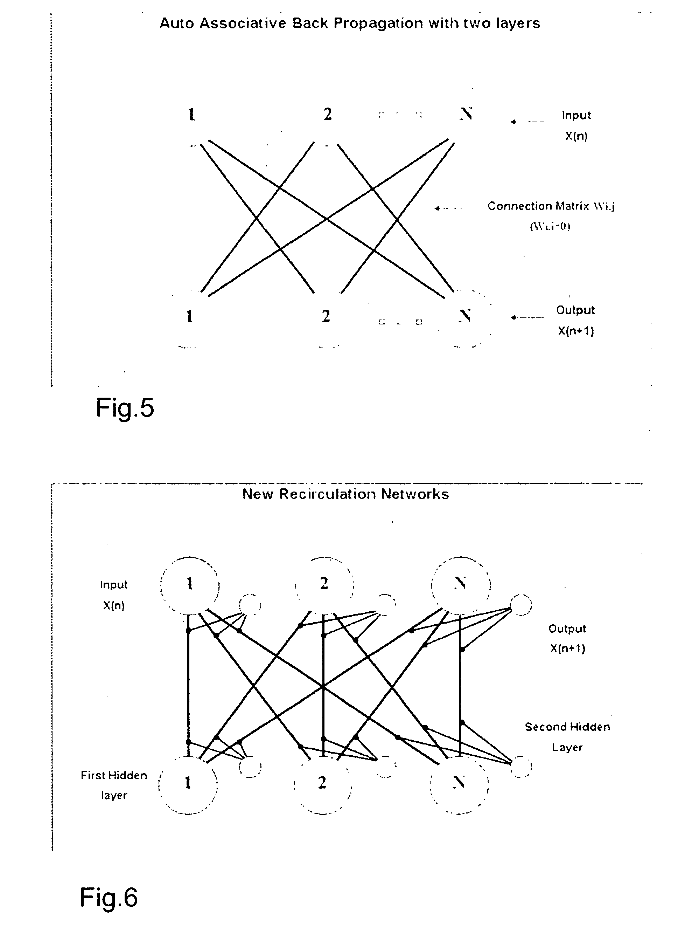

As a first Type of Auto-Associated ANN there is considered a Back Propagation ANN without a hidden unit layer and without connections on the main diagonal (for short: AutoBp) as illustrated by the schmatic figure 5.

This is a kind of ANN featuring an extremely simple learning algorithm:

$$Ouput_i = f(\sum_j^N Input_j \cdot W_{i,j} + Bias_i) = \frac{1}{1 + e^{-(\sum_i^N Input_j \cdot W_{i,j} + Bias_i)}}; \qquad W_{i,i} = 0 \quad (1)$$

$$(2) \quad \delta_i = (Input_i - Output_i) \cdot f'(Output_i) = (Input_i - Output_i) \cdot Output_i \cdot (1 - Output_i);$$

$$(3) \quad \Delta W_{i,j} = LCoef \cdot \delta_i \cdot Input_j; \qquad LCoef \in [0,1]$$

$$(4) \quad \Delta Bias_i = LCoef \cdot \delta_i.$$

The AutoBP is an ANN featuring $N^2$ - $N$ inter-node connections and $N$ Bias inside every exit node, for a total of $N^2$ adaptive weights. It is an algorithm that works similarly to logistic regression, and can be used to establish the dependency of every variable from each other.

The advantage of AutoBP is due to its learning speed, which is due to the small size of its connections and to the simplicity of its topology and its algorithm. Moreover, at the end of the learning phase, the connections between variables, because they are direct, have a clear conceptual meaning. Every connection indicates a relationship of faded excitement, inhibition or indifference between every pair of channels in the EEG track of any patient.

The disadvantage of AutoBP is its limited convergence capacity, due to that same topological simplicity. That is to say, complex relationships between variables may be approximated or ignored (for details see Rumelhart D.E., Smolensky P., McClelland J.L., Hinton G.E., Schemata and Sequential Thought Processes in PDP Models, in McClelland J.L. and Rumelhart D.E., Exploration in the Microstructure of Cognition, The MIT Press, Cambridge, MA, 1986, Vol II. and Buscema M, Constraint Satisfaction Neural Networks, in Buscema(ed), Special Issue on Artificial Neural Networks and Complex Social Systems, Substance Use and Misuse, 33,2,1998, pp389-408).

A so called New Recirculation Network is a further kind of Auto-Associated ANN. The New Recirculation Network (for short: NRC) is an original variation (See Buscema M, Recirculation Neural Networks, in Buscema(ed), Special Issue on Artificial Neural Networks and Complex Social Systems, Substance Use and Misuse, 33,2,1998, pp383-388) of an ANN that has existed in the literature (See G.E.Hinton, J.L.McClelland, Learning Representation by Recirculation, in Proceeding of IEEE Conference on Neural Information Processing Systems, November, 1988) and was not considered to be useful to the issue of auto-associating between variables. The structure of this ANN is illustrated in a schematic way in figure 6.

The topology of the NRC (see fig. 6) includes only one connection matrix and four layers of nodes: one Input layer, corresponding to the number of variables; one Output layer whose target is the Input vector, and two layers of hidden nodes that are alike in cardinality, but are independent from the cardinality of the Input and Output layers. The matrix between Input-Output nodes and Hidden nodes is fully connected and in every learning cycle it is modified both ways, according to the following equations:

$$Hidden1_i = f(\sum_{j}^{N} Input_j \cdot W_{i,j} + BiasHidden_i) = f(Net_i^{Hidden1}) = \frac{1}{1+e^{-Net_i^{H1}}} \quad ;$$

(1)

$$Output_j = R \cdot Input_j + (1-R) \cdot f(\sum_{i}^{M} Hidden1_i \cdot W_{j,i} + BiasOutput_j) =$$

$$= R \cdot Input_j + (1-R) \cdot f(Net_j^{Output}) = R \cdot Input_j + (1-R) \cdot \frac{1}{1+e^{-Net_j^{Output}}};$$

(2) $\quad R \in [0,1] \quad /* Projection\ Coefficien\ t */$

$$Hidden2_i = R \cdot Hidden1_i + (1-R) \cdot f(\sum_{j}^{N} Output_j \cdot W_{i,j} + BiasHidden_i) =$$

$$= R \cdot Hidden1_i + (1-R) \cdot f(Net_i^{Hidden2}) = R \cdot Hidden2_i + (1-R) \cdot \frac{1}{1+e^{-Net_i^{Hidden2}}};$$

(3)

$$\Delta W_{j,i} = LCoef \cdot (Input_j - Output_j) \cdot Hidden1_i;$$
$$\Delta BiasOutput_j = LCoef \cdot (Input_j - Output_j);$$
(4) $\quad LCoef \in [0,1] \quad /* Learning\ Coefficien\ t */$

$$\Delta W_{i,j} = LCoef \cdot (Hidden1_i - Hidden2_i) \cdot Output_j;$$
(5) $\quad \Delta BiasHidden_i = LCoef \cdot (Hidden1_i - Hidden2_i);$

NRC then features $N^2$ inter-node adaptive connections and $2 \cdot N$ intra-node adaptive connections (Bias). The advantages of NRC are its excellent convergence capability on complex datasets, that as a result manifests an excellent ability to interpolate complex relations between variables.

The disadvantages mainly have to do with the vectorial codification that the Hidden units run on the Input vectors, thus making it difficult to conceptually decode the matrix of its trained connections.

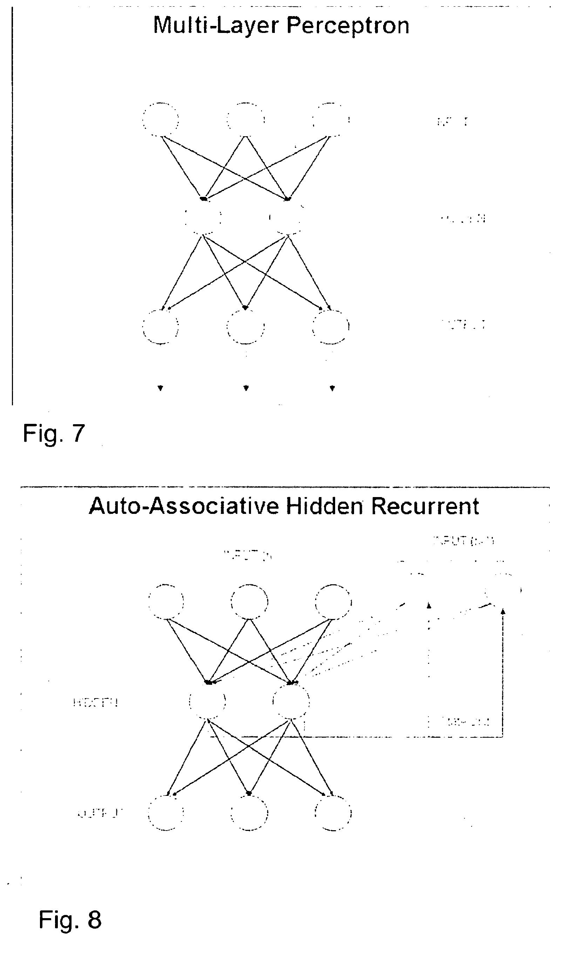

Figure 7 illustrates the schematic structure of a further example consisting in an Auto Associative Multi-Layer Perceptron (for short: AMLP) which may be used for the present method with an auto-associative purpose (encoding), thanks to its hidden units layer, that decomposes the Input vector into main nonlinear components. The algorithm used to train the MLP is a typical Back Propagation algorithm (See Chauvin Y., Rumelhart D.E. (Eds.), Backpropagation: Theory, Architectures, and Applications, Lawrence Erlbaum Associates, Inc. Publishers 365 Brodway- Hillsdale, New Jersey, 1995). The equations of the AMLP are to be considered being well known in the field of the ANN's.

The MLP, with only one layer of Hidden units (figure 7), features two connection matrices and two intra-node connection vectors (Bias), according to the following equation:

$N$ = Number of Input variables = Number of Output variables;
$M$ = Number of Nodes in the Hidden layer;
$C$ = Total number of InterNode and IntraNode connections (Bias);
$C$ = 2·N·M+N+M.

The advantages of MLP are its well-known flexibility and the strength of its Back-Propagation algorithm. Its disadvantages are its just as well-known tendency to saturate the Hidden nodes when in the presence of non-stationary functions, and the vectorial codification (allocated) of those same Hidden nodes.

Figure 8 illustrates schematically the structure of a so called Elman's Hidden Recurrent which is disclosed in greater detail in J.L.Elman, Finding Structure in Time, Cognitive Science, vol 14, 1990, pp 179-211.

Elman's Hidden Recurrent can be used for auto-associating purposes, again using the Back Propagation algorithm (for short: Auto Associative Hidden Recurrent AHR). It was used as a variation for MLP in our experimentation with memory set to one step. It is not possible to call it a proper recurring ANN in this form, because the memory would have been limited to one record before We used this variation only to give the ANN an Input vector modulated by the values of the previous Input vector at any cycle. Our purpose was not to codify the temporal dependence of the entrance signals, but rather to give the ANN a "smoother" and more mediated Input sequence. The number of connections in the RCR BP is the same as an MPL with extended Input, whose cardinality equals the number of Hidden units.

$$C = 2 \cdot \mathrm{N} \cdot \mathrm{M} + \mathrm{N} + \mathrm{M} + \mathrm{M}^2.$$

The Auto-Associated ANNs should have codified almost every pattern that is hidden during the squashing phase but which remains on its connections in every track. The implicit function, in fact, is the hyper-surface where all points in space of every EEG interpolate, as defined by their coordinates (the 19 channels).

It is believed that not all spatial models contained in an EEG refer to the brain's functioning quality and whose electric activity is represented by the EEG. Other invariant patterns, relating to specific characteristics of that brain at that moment, could be present: anxiety level, recurring thoughts, background noise in that minute-long recording, etc.

Separating the functioning invariants and the cerebral quality invariants from the others that are not needed for this task is recommended.

The hypothesis is that the health and cerebral quality invariant are more significant than the others, and thus the ANNs codified them in a more thorough manner. If this hypothesis is valid, then compressing the connection matrices, which has been obtained for every track, should eliminate the less deep spatial models, and leave the most significant ones unaltered. And the latter should correspond to the cognitive functioning invariants which are of interested here.

In other words, a new performance is carried out so as to eliminate the noisiest and most superficial traits of the previous codification, in order to isolate the gist of information regarding cognitive health in the original track.

If the following definitions are taken:

$W_i$ = connection matrix of the i-*th* EEG chart, as obtained in the squashing phase;
$H_i$ = vector of the fundamental information contained in each $W_i$ matrix;
$\eta_i$ = superficial and noisy information as codfied by each $W_i$ matrix.

Then one can synthesize this additional phase of the method of the present invention, with the purpose of eliminating noise, with the following equation:

$$W_i = H_i + \eta_i$$

The *H* vector should, therefore, represent, for every patient (EEG) the set of parameters containing key information to their brain's health and quality.

To carry out this compression an Auto-Associative ANNs with hidden units is used, which hidden units are able to project each patient's entire connection matrix into a much smaller space. More specifically, both the Auto-Associated MLP (Multi layer perceptron), and the NRC (New Recirculation Network) can be used for this second additional phase.

The compression operation can therefore be summarized with the following steps:

*G()* = Implicit function of all connection matrices of the N EEG charts;

*Z()* = Nonlinear function to transfer $W_{ij,k}$ with *C* cardinality into $H_{iq}$ with *S* cardinality, where *S<<C*;

$V^{[p]}$ = Value matrix of the p- th inter-layer of the ANN compressing the connection matrices;

$W_{ij,k}$ = Trained connection matrix of the i-th EEG, used as i-th Input vector with C cardinality;

$H_{iq}$ = Vector of the i-th Hidden layer with *S* cardinality of the trained ANN that compresses the i-th $W_i$ matrix, used as Input vector of the i-th EEG chart;

$$W_{i_{j,k}} = G(Z(W_{i_{j,k}}, \dot{V}^{[p-1]}), V^{[p]}) = G(H_{i_q}, V^{[p]});$$

where $q \in \{1,2,...,S\}$.

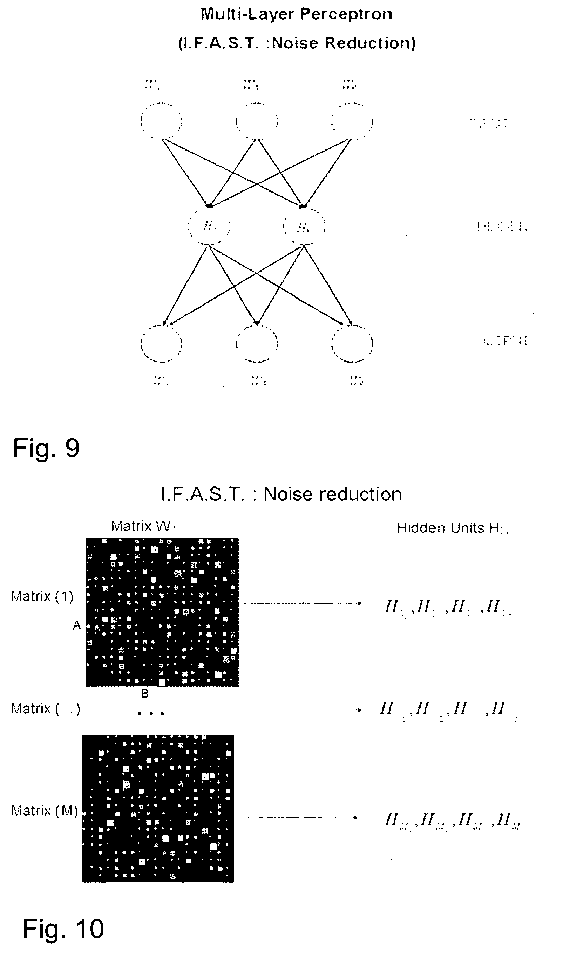

Figure 9 illustrates schematically the structure of a Multi-Layer Perceptron with hidden units for carrying out the above mentioned compression phase according to the present invention.

Figure 10 schematically tries to represent the mechanism of compression described by the above quoted equation. Each connection matrix $W_{(i)}$ is compressed in a vector of the units of the hidden layer as represented by $H1_1$, $H1_2$, $H_{1...}$, $H1_s$ etc of figure 10.

Through this further transformation, every analyzed EEG track of the patient sample has been translated into a dataset. In this new dataset, every patient is represented as a fixed group of parameters which, as a whole, should define the invariant patterns of that patient's brain-functioning quality. Through this further transformation, every analyzed EEG track of the patient sample has been translated into a dataset. In this new dataset, every patient is represented as a fixed group of parameters which, as a whole, should define the invariant patterns of that patient's brain-functioning quality.

EXPERIMENTS

Both the "squashing" and the "noise reduction" phases of the method according to the present inevntion has been carried out blindly; based only on the patients' EEG track, without any indication of their clinical state. A verification has been carried out in order to verify whether the said two phases of the method according to the invention are able to find those spatial invariants of every patient which relate to the health and functioning status of their brain.

The diagnostic gold standard has been established, for every patient, in a way that is completely independent from the clinical and instrumental examination (MRI, etc.) carried out by a group of experts whose diagnosis has been also reconfirmed in time.

Every sample patient has been specifically diagnosed with the IFAST method. The diagnoses have been divided into the following three classes, based on delineated inclusion criteria:

"Normal" elderly patients (NOLD);

Elderly patients with "Cognitive decline" (MCI);

Elderly patients with "mild Alzheimer" (AD) ;

The last generated dataset was re-written, adding to every $H_i$ vector (the invariant traits as defined by the noise reduction phase) the diagnostic class that an objective clinical examination had assigned to every patient. For example:

Patient 1: $H_{1_1}, H_{1_2}, H_{1_3}, H_{1...}, H_{1_s} \rightarrow$ NOLD

Patient 2: $H_{2_1}, H_{2_2}, H_{2_3}, H_{2...}, H_{2_s} \rightarrow$ AD

Patient ...: $H_{...1}, H_{...2}, H_{...,}, H_{...s} \rightarrow$ MCI

Patient M: $H_{M_1}, H_{M_2}, H_{M_3}, H_{M..}, H_{M_s} \rightarrow$ AD.

A new dataset called "Diagnostic DB" was created for easier comprehension.
At this point, a normal, supervised feed-forward ANNs was used to calculate the following classification function:

$$y = \Phi(H, r^*);$$

Where:

y = diagnostic class of the patient {Nold, AD, MCI};
$\Phi$ = a proper nonlinear function, simple or complex;
H = the ANN's Input vector, containing the invariantsthat IFAST found
$r^*$ = weight matrix/matrices defining parameters for the function that must be approximated.

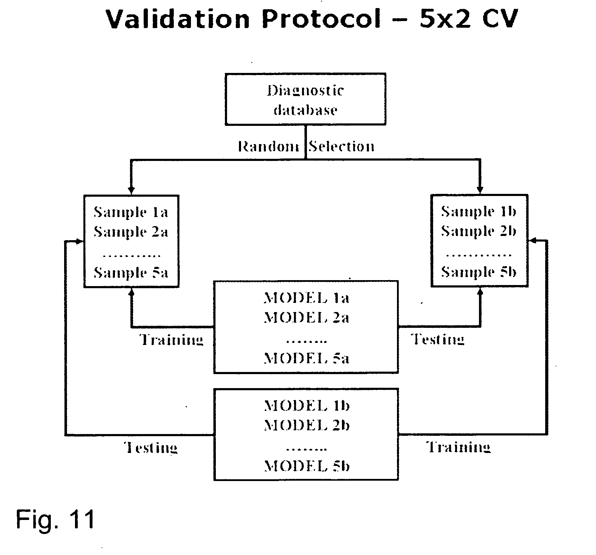

To verify the supervised ANNs' ability for blind classification, the 5x2 CV protocol of figure 11 was adopted which protocoll is further described in Dietterich TG. , Approximate statistical tests for comparing supervised classification learning algorithms, Neural Computation,1988;10(7):1895-924. This is a robust protocol that allows one to evaluate the allocation of classification errors.
The ANNs' good or excellent ability to diagnostically classify all patients in the sample from the results of the confusion matrices of these 10 independent experiments would indicate that the spatial invariants extracted with the method according to the present invention truly relate to the functioning quality of the brains which were examined through their EEG.
It would mean that a brain's quality is concealed in the electric, a-temporal, background noise of a brain at rest.

Experimental setting

Subjects and diagnostic criteria

The study population included:

a. 180 AD patients (Mini Mental State Examination: Mean =19.9, SD=4.9);
b. 115 MCI subjects (MMSE: Mean=25.2, SD=2.4);
c. 171 healthy ageing volunteers (MMSE: Mean=27.7, SD=1.5)

The three samples were matched for age, gender and years of education. Local institutional ethics committees approved the study. All experiments were performed with the informed and overt consent of each participant or caregiver.
The present inclusion and exclusion criteria for MCI were based on previous seminal studies (See Rubin EH, Morris JC, Grant FA, Vendegna T (1989). Very mild senile dementia of the Alzheimer type. I.Clinical assessment. Arch Neurol. 1989 Apr;46(4):379-82. Albert M, Smith LA, Scherr PA, Taylor JO, Evans DA, Funkenstein HH. Use of brief cognitive tests to identify individuals in the community with clinically diagnosed Alzheimer's disease. Int J Neurosci. 1991 Apr;57(3-4):167-78. Flicker C, Ferris SH, Reisberg B. Mild cognitive impairment in the elderly: predictors of dementia. Neurology. 1991 Jul;41(7):1006-9. Zaudig M. A new systematic method of measurement and diagnosis of "mild cognitive impairment" and dementia according to ICD-10 and DSM-III-R criteria. Int Psychogeriatr. 1992;4 Suppl 2: 203-19. Devanand DP, Folz M, Gorlyn M, Moeller JR, Stern Y. Questionable dementia: clinical course and predictors of outcome. J Am Geriatr Soc. 1997 Mar; 45(3):321-8. Petersen RC, Smith GE, Ivnik RJ, Tangalos EG, Schaid DJ, Thibodeau SN, Kokmen E, Waring SC, Kurland LT. Apolipoprotein E status as a predictor of the development of Alzheimer's disease in memory-impaired individuals. JAMA. 1995 Apr 26;273(16):1274-8. Petersen RC, Smith GE, Waring SC, Ivnik RJ, Kokmen E, Tangelos EG. Aging, memory, and mild cognitive impairment. Int Psychogeriatr. 1997;9 Suppl 1:65-9. Petersen RC, Doody R, Kurz A, Mohs RC, Morris JC, Rabins PV, Ritchie K, Rossor M, Thal L, Winblad B. Current concepts in mild cognitive) and designed for selecting elderly persons manifesting objective cognitive deficits, especially in the memory domain, who did not meet criteria for a diagnosis of dementia or AD, namely with:

i) objective memory impairment on neuropsychological evaluation, as defined by performances $\geq$ 1.5 standard deviation below the mean value of age and education-matched controls for a test battery including Memory Rey list (immediate recall and delayed recall), Digit forward and Corsi forward tests;
ii) normal activities of daily living as documented by the patient's history and evidence of independent living;
iii) clinical dementia rating score of 0.5; and
iv) Geriatric Depression Scale scores < 13.

Probable AD was diagnosed according to NINCDS-ADRDA (See McKhann G, Drachman D, Folstein M, Katzman R, Price D, Stadlan EM (1984) Clinical diagnosis of Alzheimer's Disease: report of the NINCDS-ADRDA work group under the auspices of department of Health and Human Services Task Force on Alzheimer's Disease. Neurology; 34: 939-44). Patients underwent general medical, neurological and psychiatric assessments and were also rated with a number of standardized diagnostic and severity instruments that included MMSE (See Folstein MF, Folstein SE, McHigh PR (1975). Mini Mental State: a pratical method for grading the cognitive state of patients for the clinician. Journal of Psychiatric Research; 12: 189-198.), Clinical Dementia Rating Scale (See Hughes CP, Berg L, Danziger WL, Coben LA, Martin RL. A new clinical scale for the staging of dementia. Br J Psychiatry. 1982 Jun;140:566-72), Geriatric Depression Scale (See Yesavage JA, Brink TL, Rose TL, Lum O Huang V, Adey M, Leirer VO. Development and validation of a geriatric depression screening scale: a preliminary report. J Psychiatr Res. 1982-83;17(1):37-49), Hachinski Ischemic Scale (See Rosen WG, Terry RD, Fuld PA, Katzman R, Peck A Pathological verification of ischemic score in differentiation of dementias. Ann Neurol. 1980 May;7(5):486-8), and Instrumental Activities of Daily Living scale (See Lawton MP, Brody EM (1969). Assessment of Older people: Self Maintaining ad Instrumental Activities of Daily Living, Gerontologist, 9: 179-186). Neuroimaging diagnostic procedures (CT or MRI) and complete laboratory analyses were carried out to exclude other causes of progressive or reversible dementias, in order to have a homogenous mild AD patient sample. The exclusion criteria included, in particular, any evidence of

(i) front temporal dementia diagnosed according to criteria of Lund and Manchester Groups (See Lund and Manchester Groups. Clinical and neuropathological criteria for fronto-temporal dementia. J Neurol Neurosurg Psychiatry 1994; 57: 416-18);
(ii) vascular dementia as diagnosed according to NINDS-AIREN criteria (Roman GC, Tatemichi TK, Erkinjuntti T, Cummings JL, Masdeu JC, Garcia JH, Amaducci L, Orgogozo JM, Brun A, Hofman A. Vascular dementia: diagnostic criteria for research studies. Report of the NINDS-AIREN International Workshop. Neurology 1993; 43: 250-60) and neuroimaging evaluation scores (Frisoni GB, Beltramello A, Binetti G, Bianchetti A, Weiss C, Scuratti A, Trabucchi M. Computed tomography in the detection of the vascular component in dementia. Gerontology. 1995;41(2):121-8 and Galluzzi S, Sheu CF, Zanetti O, Frisoni GB Distinctive clinical features of mild cognitive impairment with subcortical cerebrovascular disease. Dement Geriatr Cogn Disord. 2005;19(4):196-203);
(iii) extra-pyramidal syndromes;
(iv) reversible dementias (including pseudo-dementia of depression); and
(v) Lewy body dementia according to the criteria by McKeith (See McKeith IG, Galasko D, Kosaka K, Perry EK, Dickson DW, Hansen LA, et al. (1996). Consensus guidelines for the clinical and pathologic diagnosis of dementia with Lewy bodies (DLB): report of the consortium on DLB international workshop. Neurology; 47 (5):1113-1124).

It is important to note that benzodiazepines, antidepressant and/or antihypertensive drugs were withdrawn for about 24hours before the EEG recordings.

The NOLD subjects were recruited mostly among non-consanguineous patients' relatives. All NOLD subjects underwent physical and neurological examinations as well as cognitive screening. Subjects affected by chronic systemic illnesses, subjects receiving psychoactive drugs, and subjects with a history of present or previous neurological or psychiatric disease were excluded. All NOLD subjects had a GDS score lower than 14 (no depression).

EEG Recordings

EEG data were recorded in wake rest state (eyes-closed), usually during late morning hours from 19 electrodes positioned according to the International 10-20 System (i.e. Fp1, Fp2, F7, F3, Fz, F4, F8, T3, C3, Cz, C4, T4, T5, P3, Pz, P4, T6, O1, 02; 0.3-70 Hz filtering bandpass). A specific reference electrode was not imposed to all recording units of this multi-centric study, since any further data analysis was carried out after EEG data were re-referenced to a common average reference. The horizontal and vertical electrooculogram was simultaneously recorded to monitor eye movements. An operator controlled, on-line, the subject and the EEG traces by alerting the subject any time there were signs of behavioral and/or EEG drowsiness in order to keep the level of vigilance constant. All data were digitized (5 min of EEG; 0.3-35 Hz band pass 128 Hz sampling rate).

The duration of the EEG recording (5 min) allowed the comparison of the present results with several previous AD studies using either EEG recording periods shorter than 5 minutes (See Buchan RJ, Nagata K, Yokoyama E, Langman P, Yuya H, Hirata Y, Hatazawa J, Kanno I. Regional correlations between the EEG and oxygen metabolism in dementia of Alzheimer's type. Electroencephalogr Clin Neurophysiol. 1997 Sep;103(3):409-17. Pucci E, Belardinelli N, Cacchio G, Signorino M, Angeleri F. EEG power spectrum differences in early and late onset forms of Alzheimer's disease. Clin Neurophysiol. 1999 Apr;110(4):621-31. Szelies B, Mielke R, Kessler J, Heiss WD. EEG power changes are related to regional cerebral glucose metabolism in vascular dementia. Clin Neurophysiol. 1999 Apr;110(4):615-20. Rodriguez G, Vitali P, De Leo C, De Carli F, Girtler N, Nobili F. Quantitative EEG changes in Alzheimer patients during long-term donepezil therapy. Neuropsychobiology. 2002;46(1):49-56. Babiloni C, Ferri R, Moretti DV, Strambi A, Binetti G, Dal Forno G, Ferreri F, Lanuzza B, Bonato C, Nobili F, Rodriguez G, Salinari S, Passero S, Rocchi R, Stam CJ, Rossini PM. Abnormal fronto-parietal coupling of brain rhythms in mild Alzheimer's disease: a multicentric EEG study.Eur J Neurosci. 2004 May;19(9):2583-90. Babiloni C, Binetti G, Cassetta E, Cerboneschi D, Dal Forno G, Del Percio C, Ferreri F, Ferri R, Lanuzza B, Miniussi C, Moretti DV, Nobili F, Pascual-Marqui RD, Rodriguez G, Romani GL, Salinari S, Tecchio F, Vitali P, Zanetti O, Zappasodi F, Rossini PM. Mapping distributed sources of cortical rhythms in mild Alzheimer's disease. A multicentric EEG study. Neuroimage. 2004 May;22(1):57-67.) or shorter than 1 minute (Dierks T, Ihl R, Frolich L, Maurer K. Dementia of the Alzheimer type: effects on the spontaneous EEG described by dipole sources. Psychiatry Res. 1993 Oct;50(3):151-62 and Dierks T, Jelic V, Pascual-Marqui RD, Wahlund L, Julin P, Linden DE, Maurer K, Winblad B, Nordberg A. Spatial pattern of cerebral glucose metabolism (PET) correlates with localization of intracerebral EEG-generators in Alzheimer's disease. Clin Neurophysiol. 2000 Oct;111(10):1817-24). Longer resting EEG recordings in AD patients would have reduced data variability but would have increased the possibility of EEG "slowing" because of reduced vigilance and arousal.

EEG epochs with ocular, muscular, and other types of artefact were preliminary identified by a computerized automatic procedure. Those manifesting sporadic blinking artefacts (less than 15% of the total) were corrected by an Autoregressive method (see Moretti DV, Babiloni F, Carducci F, Cincotti F, Remondini E, Rossini PM, Salinari S, Babiloni C. Computerized processing of EEG-EOG-EMG artifacts for multi-centric studies in EEG oscillations and event-related potentials. Int J Psychophysiol. 2003 Mar;47(3):199-216). Two independent experimenters -blind to the diagnosis- manually confirmed the EEG segments accepted for further analysis. A continuous segment of artefact-free EEG data lasting 60s was used for subsequent analyses for each subject.

Pre-processing protocol

The entire sample of 466 subjects was recorded at 128Hz for 1 minute. The EEG track of each subject was represented by a matrix of 7680 sequential rows (time) and 19 columns (the 19 channels).

The squashing phase of method according to the present invention was implemented using different Auto Associative ANNs:

An Auto-Associative BP with 2 layers (ABP);
A New Recirculation ANN (NRC);
An Auto-Associative Multilayer Perceptron with 3 layers (AMLP);
An Auto-Associative Hidden Recurrent (AHR).

Every Auto-Associative ANNs independently processed every EEG of the total sample in order to assess the different capabilities of each ANNs to extract the key information from the EEG tracks.

Table 1 summarizes the Auto-Associative ANNs types and parameters used during the processing.

Table 1 Auto-Associative ANNs Types and Parameters Used During the Processing.

| ANN Parameters/Type | ABp | NRC | AMLP | AHR |
|---|---|---|---|---|
| Number of Inputs | 19 | 19 | 19 | 19 |
| Number of Outputs | 19 | 19 | 19 | 19 |
| Number of State Units | 0 | 0 | 0 | 10 |
| Number of Hidden Units | 0 | 19 | 10 | 10 |
| Number of Weights | 361 | 399 | 409 | 509 |
| Number of Epoches | 200 | 200 | 200 | 200 |
| Learning Coefficient | 0.1 | 0.1 | 0.1 | 0.1 |
| Projection Coefficient | Null | 0.5 | Null | Null |

After this processing each EEG track is squashed into the weights of every ANN resulting in 4 different and independent datasets (one for each ANN), whose records are the squashing of the original EEG tracks and whose variables are the trained weights of every ANN.

The second phase according to the invention is the noise elimination phase.

Each of the 4 datasets is compressed through another Auto-Associative ANN. The NRC was the ANN which demonstrated the best capability to do this task.

Table 2 define the criterions of this phase.

| ANN for compression: NRC | Dataset from ABP | Dataset from NRC | Dataset from AMLP | Dataset from AHR |
|---|---|---|---|---|
| Input (Number of Weights) | 361 | 399 | 409 | 509 |
| Hidden Units (Compression) | 120 | 120 | 120 | 120 |
| Learning Coefficient | 0.1 | 0.1 | 0.1 | 0.1 |
| Projection Coefficient | 0.5 | 0.5 | 0.5 | 0.5 |
| RMSE Criterion for training | Err<0.05 | Err<0.05 | Err<0.05 | Err<0.05 |

The classification phase of the method according to the present invention

The real target (AD or MCI or NOLD) was added to each record into the 4 independent datasets. The validation protocol 5x2CV was applied blindly to test the capabilities of a generic supervised ANN to correctly classify each record (120 new inputs).

A supervised MLP was used for the classification task, without hidden units. In every experimentation, in fact, it as possible to train perfectly the ANN in no more than 100 epochs (RMSE<0.0001). That means that in this last phase one could have used also a linear classifier to reach up the same results.

RESULTS

Table 3 documents the mean results after 10 different processings for each dataset for each different classification (AD vs. MCI and MCI vs. NOLD). In order to split each dataset into two halves (Training and Testing), an evolutionary algorithm was used. This algorithm allows one to split the entire sample into two sub-samples with a similar function of probability distribution (See Buscema M., Grossi E., Intraligi M., Garbagna N., Andriulli A., Breda M., An optimized experimental protocol based on neuro-evolutionary algorithms.[..], in Artificial Intelligence in Medicine (2005) 34, 279-305). Consequently, every experiment was conducted in a blind and independent manner in two directions: training with sub-sample A and blind testing with sub-sample B vs. training with sub-sample B and blind testing with sub-sample A.

**Table 3 Plan of experimentations**

| Type of Classifications | Datasets generated by T&T | Couples of sub-samples | Blind Tr-ts Processing | |
|---|---|---|---|---|
| AD-MCI | ABP | 5 | 10 | |
| | NRC | 5 | 10 | |
| | AMLP | 5 | 10 | |
| | AHR | 5 | 10 | |
| MCI-Nold | ABP | 5 | 10 | |
| | NRC | 5 | 10 | |
| | AMLP | 5 | 10 | |
| | AHR | 5 | 10 | |
| 2 | 8 | 40 | 80 | Total |

Subsequent to generating 5 independent couples of sub-samples for every dataset and for every type of classification with the T&T Evolutionary Algorithm described above the well known 5x2Cv validation protocol was implemented.

The following tables 4 and 5 note the mean results for the classifications of AD vs. MCI and the mean results for the classifications of MCI vs. NOLD respectively.

The AHR achieved the best results in the first classification task (AD vs. MCI = 92.33%); the AMLP achieved the best results in the second classification task (MCI vs. NOLD = 93.46%).

**Table 4.1** FAST: Summary of Results AD vs. MCI

| I FAST Blind Classification | AD vs. MCI | | |
|---|---|---|---|
| **Type of Input Vector** | **Sensitivity** | **Specificity** | **Accuracy** |
| **ABP** | 85 | 85 | 85 |
| **NRC** | 83.66 | 89.86 | 86.76 |
| **AMLP** | 90.17% | 91.48% | 90.82% |
| **AHR** | **89.34%** | **95.32%** | **92.33%** |

Table 5 Summary of Results MCI vs. Nold

| I FAST Blind Classification | MCI vs. Nold | | |
|---|---|---|---|
| **Type of Input Vector** | **Sensitivity** | **Specificità** | **Accuracy** |
| **ABP** | 93.09 | 91.39 | 92.24 |
| **NRC** | 96.08 | 89.58 | 92.83 |
| **AMLP** | **95.87** | **91.06** | **93.46** |
| **AHR** | 96.16 | 85.83 | 90.99 |

Various types of non-reversible forms of dementias represent a major health problem in all those countries where the average life-span is progressively increasing. There is a growing amount of scientific and clinical evidence that the brain is reacting to the aggression of neurodegenerative agents by plastic reorganization, which makes it able to retain brain functions at an acceptable level before clear symptoms of dementia appear. The length of this pre-symptomatic period is currently unknown but the in the case of AD, often preceded by MCI, it lasts several years. Even in the absence of an efficacious treatment, able to block progression and/or to reverse the cognitive decline, it is generally agreed that early initiation of the available treatment (i.e. inhibitors of anti cholinesterase drugs) provides the best results Therefore the method according to the present invention is a significant advancement in the fight against dementias being a non-invasive, easy-to-perform and low-cost tool giving diagnostic informations capable of screening with an high rate of positive prognostication of a large at risk population sample (i.e. MCI, subjects with genetic defects and a family history of dementias or other risk factor).

Although EEG, would fulfill-up all the previous requirements, the way in which it is presently utilized does not guarantee its ability to accurately differentially diagnose MCI, early AD and healthy non-impaired aged brains. The neurophysiological community always had the perception that, there is much more information about brain functioning embedded in the EEG signals than those currently being extracted in a routine clinical context. The obvious consideration is that the generating sources of EEG signals (cortical post-synaptic currents at dendritic tree level) are the same ones as those being attacked by the factors producing symptoms of dementia. The main problem was that in the signal to noise ratio the latter is largely overwhelming the former. A simple metaphor can help one to understand the complexity of the underlying problem: the EEG fluctuations at the 19 recording electrodes resemble the fluctuations of 19 stock exchanges securities over time (minutes, hours, days etc.) in which the purchases/sales ratios are carried out by millions of invisible investors, following a logic which is unknown to the analyzer, but which is based on the intrinsic mechanism regulating the market. In this context, the "analyzer" ignores all the following variables:

a) why the value of a given security (EEG signal) in increasing or decreasing at each time; i

b) how many investors (neurones, synapses, synchronous firing) are active with regard to that stock at a given time;

c) when new investors, eventually organized, suddenly enter the market that is regulating that security and significantly alters the trend of the previous fluctuations (i.e. the subject's condition is altered because of an 'external' or 'internal' event);

d) rules determining the inner dynamics of the market, the reasons why investors purchase or sale.

The only two variable that the "analyzers" knows with certainty are the following:

1) The chaotic stock market entirely depends upon the interplay of a large number of investors (brain, neurons, synapses);

2) the investor's styles and abilities are embedded within the dynamics (variability) of the stock securities.

The reasons why the clinical use of EEG has been somewhat limited and disappointing with respect to early diagnosis of AD and identification of MCI - despite the progresses obtained in recent years - are due to the ongoing, following, erring, general principles:

A) identify and synthesize the mathematical components of the signal coming from each individual recording site (EEG channel exploring only one, discrete brain area under the exploring electrode) and to sum-up all of them in the attempt to reconstruct the general information;

B) focus on the time-variations of the signal coming from each individual recording site, and

C) mainly employing linear analysis instruments. The basic principle which is proposed in the method according to the present invention is very simple: all the signals from all the recording channels are analyzed together -and not individually- both in time and space. The reason for such an approach is quite simple and self-explaining: the instant value of the EEG in any recording channel depends, in fact, upon its previous and following values (how many, and in which amount for each previous state?), upon the previous and following values of all the other recording channels (how many, and in which amount for each previous state?).

In summary, the aim of the "analyzer" is not to analyze the language of each individual recording channel, but to evaluate the meta-language which considers the holistic contribution of all the recording channels. We, in fact, believe that the EEG of each individual subject is defined by a specific background signal model, distributed in time and in the space of the recording channels (19 in our case). Such a model is a set of background invariant features able to specify the quality (i.e. cognitive level) of the brain activity, even in a so called resting condition. We all know that the brain never rests, even with closed eyes and if the subject is required to relax. The system that we have applied in this research context completely ignores the subject's contingent characteristics (age, cognitive status, emotions etc.). It utilized a recurrent procedure which squeezes at progressive steps the significant signal and progressively eliminates the non-significant noise.

The experimental tests has confirmed the hypothesis that a correct automatic classification of NOLD, MCI, and AD subjects can be obtained by extracting spatial information content of the resting EEG voltage by ANNs. The spatial content of the EEG voltage was extracted by the method according to the present invention. This has been done by a method in which the ANNs did not classify individuals using EEG data as an input. Rather, the data inputs for the classification were the weights of the connections within an ANN trained to generate the recorded EEG data. These connection weights represented a useful model of the peculiar spatial features of the EEG patterns at scalp surface. The results document that the correct automatic classification rate reached 92.33% % for AD vs. MCI and 93.46% for MCI vs. NOLD. The results obtained are superior to those obtained with the more advanced currently available non linear techniques. These results confirmed the working hypothesis and represent the basis for research designed to integrate EEG derived spatial and temporal information content using ANNs. They also prompt future studies for the early identification of MCI individuals manifesting extremely high chances - being at risk -of progressing to AD, based on the present procedure.

From methodological point of view it has been demonstrated the need to analyse the 19 EEG channels of each person as a whole complex system, whose decomposition and/or linearization can involve the loss of many key information.

The most of researches on EEG , also using advanced techniques (wavelet, neural networks, etc.), consider each channel quite independent from the others. In the best cases, literature try to extract from each channel some key information. That because the whole dynamics of the channels is considered full of misleading information, in other words, full of noise.

Obviously, noise is spread out in one minute of any EEG at 128Hz. But, non linear associations in a dynamical system are not necessary noise. As Mandelbrot demonstrated in stock market field, irregular behaviour is sometime the fingerprint of a specific class of non stationary systems : these systems show a very long memory (some features shape the system dynamics all the time), wild randomness behaviours and their frequency distribution do not follow the classical normal distribution law.

With this kind of complex systems is not possible to establish a priori which information is relevant and which is not. Non Linear Auto Associative ANNs are one of the way to extract from these systems the maximum of linear and non linear associations (features) able to explain their "strange" dynamics.

The tables of Figures 16 describe a further practical experiment for evaluating the inventive method. The database of known cases comprised 101 patients, with 40 patients suffering from a mild form of Alzheimer's disease, and the remaining 61 patients being normal. The method was evaluated on a very complex clinical basis, including various test batteries (e.g. the Minimental test), instrumental tests (MRI, etc.) and on doctor's judgment, based on patient's observation with time.

Again the purpose of the method was to classify patients as belonging to the group of those that suffer from the mild form of Alzheimer's disease or to the group of normal patients. This condition was parametrized by the numerical values 0 and 1 respectively, as shown in the Test column.

The patients of the Controls column were used as controls. Each patient was assigned the weight matrix obtained by the method according to this invention, as described above, and further compressed to obtain 128 numerical parameters.

Figures 12 to 15 relate to the processing wiht the method according to the present invention of the database of Figure 16 by using a so-called clustering algorithm, and particularly the known Self Organizing Map algorithm, or SOM. More detailed information on this type of network are contained, for example, in "Reti Neurali Artificiali e Sistemi sociali Complessi" Volume I- Teoria e Modelli, Massimo Buscema e Semeion Group, 1999 Franco Angeli S.r.l. Milano ISBN 88-464-1682-1.

The 101 objects of the database of Figure 16, divided into a group of 61 controls and a group of 40 Alzheimer's disease cases, in which each object is associated to a record consisting of the weight matrix, obtained by processing the sampled signals from the various channels by the auto-associated neural network, which matrix was further compressed by using an auto-associated network for compression, are processed by a Self Organizing Map. Each record of each object comprises 128 variables, corresponding to the values of the compressed weight matrix.

The first map in the upper left corner of Figure 12 shows the arrangement of the objects in the matrix. The bottom left map shows the objects that are deemed to be normal, whereas the bottom left map shows the objects suffering from Alzheimer's disease. The top right map shows the frequencies of CTR normal objects and those of Alzheimer's disease object, in SOM clusterized form.

Figure 13 shows the codebook matrix for the objects. The overview shows very similar codebooks, in which the peculiar codebook characteristics which represent Alzheimer's disease cases with respect to normal cases are not visually distinguishable.

Figure 14 shows the graphic representation of the variables of the weight matrix associated to each object. Here, a higher uniformity of the variable is noted in the areas in which the patients affected from Alzheimer's disease are distributed.

Figure 15 is a graphic representation for analysis of the value of each class (matrix unit) with its neighborhood of eight surrounding units over the matrix. The group of units that classify the patients suffering from Alzheimer's disease forms a macro-class, whereas the units that classify normal patients are not systematically related to one another but are often arranged around empty units which form intermediate codebooks.

The method of the invention which provides processing of multichannel signals of objects or sources by an auto-associative neural network to determine a weight matrix that might act as a record for such object is also useful and advantageous in combination with a clustering algorithm, such as a Self Organizing Map.

**Claims**

1. Method of processing a sequence of at least two or more multivariate medical signals coming from one source or object, wherein each signal is subjected to processing for classifying the signals, **characterized in that** the signals from each channel are subjected to
a first processing step by a recirculation Artificial neural network being trained on the signals to generate the recorded multichannel and multivariate signals, which recirculation artificial neural network has a single weight matrix and is trained in such a manner as to synthesize the parameters indicating how the channels have negotiated their interaction in parallel;
and a second processing step in which the weights of the connections between the knots of the recirculation neural network determined in the first processing step are processed by a second artificial neural network which provides a classification of said signals coming from one source or object, being said weights of the connections input into said second neural network.

2. Method according to claim 1, **characterised in that** the recirculation neural network is of the non supervised kind.

3. A method as claimed in claim 1, **characterized in that** the recirculation neural network has as many input nodes as there are channels and as many output nodes as there are channels.

4. A method as claimed in one or more of the preceding claims, **characterized in that** a graphic reconstruction in space and/or time of the interactions among the channels is obtained from the numerical data of the weight matrix, the weight matrix being composed of as many lines and as many columns as channels, and each column and each line having a channel associated thereto, whereas each element of the weight matrix is defined as a describer of the relationship between the two channels associated to the line and the column that define the position of said element and the absolute value of said element is related to the intensity of the relationship between said two channels, whereas the sign of said element defines either a reinforcing or an inhibiting relationship.

5. A method as claimed in one or more of the preceding claims, **characterized in that** an additional processing step is provided which consists in processing again the weight matrix for each object or each source by using a recirculation neural network, to obtain a compression of input data, the network having in this case as many inputs as components of the weight matrix obtained from previous processing of the multichannel multivariate signals by a recirculation neural network and a reduced number of outputs, depending on the desired compression.

6. A method as claimed in one or more of the preceding claims, **characterized in that** it includes the following steps:

   Providing at least one object or one source adapted to generate different time-dependent signals;
   Sensing each of these signals on a separate channel and in the same time interval, having identical start and end times for all signals of all channels;
   Sampling the signals of each channel and generating a data matrix in which each line corresponds to one of the channels and each column corresponds to the sampling value of the signal of each channel in the corresponding sampling interval;
   Providing a recirculation neural network having as many input nodes as output nodes;
   Training the recirculation neural network so that the weight matrix describes the hypersurface that synthesizes the interactions between the channels;
   Associating the weight matrix so obtained as matrices of variables that characterize the object or the source, i.e. the records of the object or the source.

7. A method as claimed in claim 6, **characterized in that** it includes the processing of the weight matrix obtained from parallel processing of the various channel signals of the object or source, by a compression algorithm to reduce the number of elements composing said weight matrix and further filtering the noise components still contained in the signal.

8. A method as claimed in claim 7, **characterized in that** said compression is obtained by processing the weight matrix by a recirculation neural network having as many inputs as weight matrix components and fewer outputs than inputs.

9. A method for classifying objects or sources of multichannel, multivariate signals, wherein said signals are processed by a classification algorithm such as a supervised neural network, a clustering algorithm or the like, the weight matrix, determined according to the steps defined in one or more of the preceding claims 1 to 7, possibly compressed, being used as a record for representing each object or each source.

10. A method as claimed in claim 9, wherein the following steps are provided:

   Providing a database of objects or sources of multichannel and multivariate signals, whose classification according to predetermined qualities or characteristics is known;
   Processing the signals from the channels of said objects or said sources by using a recirculation network and/or possibly also to a step of compression of the components of the weight matrix obtained according to one or more of the preceding claims 1 to 8;
   Transforming by alignment of the lines of the uncompressed or compressed weight matrix into a vector;
   Defining numerical parameters for uniquely representing the known and predetermined quality or characteristic;

Training and testing a predictive algorithm by imposition of the vector for representing the numerical values of the weight matrix, either uncompressed or compressed, as an input, and of the parameters for uniquely representing the known and predetermined quality of characteristic as an output;

Detecting multichannel and multivariate signals of one or more additional objects or of one or more additional sources whereof the predetermined quality or characteristic is not known;

Processing the signals from the channels for each object or each source by using a recirculation neural network and determining the weight matrix according to the method as claimed in one or more of claims 1 to 8;

Possibly reducing the number of numerical components of the weight matrix by compression as claimed in claim 4 or 8;

Transposing the numerical values of the uncompressed or compressed vector-like weight matrix, by arranging on a single line the numerical elements of the lines of said compressed or uncompressed weight matrix;

Processing the vector-like compressed or uncompressed weight matrix by using the trained predictive algorithm and determining the predefined qualities or characteristics of the object or source from the output parameters of said predictive algorithm provided by said processing.

11. A method as claimed in claim 10, **characterized in that** a so-called supervised neural network is used as a predictive algorithm.

12. A method as claimed in claim 9, **characterized in that** a clustering algorithm is used as a classification algorithm.

13. A method as claimed in claim 12, **characterized in that** the clustering algorithm is a so-called Self-Organizing Map.

14. A method as claimed in one or more of the preceding claims, **characterized in that** it is used for treating multichannel signals of electroencephalograms (EEG).

15. A method as claimed in claim 14, **characterized in that** it is used for treating multichannel signals of electroencephalograms of patients potentially suffering from Alzheimer's disease, the objects or sources being a patient and electroencephalogram patterns of said patient respectively.

16. A method as claimed in claim 15, **characterized in that** for each patient:

Encephalographic patterns of several different areas of the brain are detected, separately on different channels, in the same time interval having the same start time and the same end time on all channels;

The signals of patterns are sampled, whereby a matrix is generated in which the lines are formed by the numerical channel sampling values;

Said data matrix is processed by a recirculation neural network having as many input nodes and output nodes as there are channels, whereas the weight matrix obtained from such processing is used as a matrix of the records of each object;

Possibly but without limitation, the weight matrix for each object is further subjected to compression by using a recirculation neural network having as many inputs as the elements of the weight matrix determined in the previous step, and fewer outputs.

17. A method as claimed in one or more of claims 14 to 16, **characterized in that** the weight matrix is used to generate a space-time map of the interactions among the areas of the brain associated to each channel, according to the method of claim 5.

18. A method as claimed in one or more of claims 14 to 17, **characterized in that** it is used as a method for classifying objects whereof the presence or absence of a neurological disease is unknown.

19. A method as claimed in claim 18, **characterized in that** it is used as a method for classifying objects whereof the presence or absence of Alzheimer's disease is unknown.

20. A method as claimed in claim 18 or 19, **characterized in that** it includes the following steps:

Providing a database of known cases, comprising a predetermined number of objects whereof the pathologic Alzheimer's disease condition is known;

Subjecting each of said objects to encephalographic examination, and registering the signals of each channel of the electroencephalogram;

Processing said multichannel signals of the encephalogram for each object by sampling and processing them by a recirculation neural network, according to the method as claimed in one or more of claims 1 to 8;

Using the weight matrix determined by said recirculation weight matrix and possibly further compressed, and the parameters for representing the pathologic condition relative to the presence of Alzheimer's disease, to train a supervised neural network, by providing, as input data, the numerical values of the weight matrix, possibly compressed, or in a form in which the numerical components of said matrix are arranged in a vector-like form over a single line, and as output data of said supervised neural network, the parameters for representing the pathologic condition;

Classifying an object of unknown pathologic condition, by using said supervised neural network, which has been trained with the following steps:

Sensing the signals of the electroencephalogram channels for said object and constructing a data matrix formed by a single line per channel and by the corresponding sampled signal;

Determining the weight matrix of a recirculation neural network having as many input nodes as output nodes and as channels;

Using such weight matrix, possibly further compressed relative to the numerical elements thereof, as a record representative of the object;

Transposing the numerical data of said weight matrix, possibly compressed, into a vector form, i.e. with all the lines into a single line;

Determining the output parameters of the classification supervised neural network, by providing said network with the numerical values of the possibly compressed weight matrix, transposed into vector form, as input data.

**Patentansprüche**

1. Verfahren zur Verarbeitung einer Abfolge von mindestens zwei oder mehr multivariaten medizinischen Signalen, die von einer Quelle oder einem Objekt kommen, wobei jedes Signal einer Verarbeitung zur Klassifizierung der Signale unterzogen wird, **dadurch gekennzeichnet, dass** die Signale jedes Kanals unterzogen werden:

einem ersten Schritt der Verarbeitung durch ein rekurrentes künstliches neuronales Netzwerk, das anhand der Signale trainiert wird, um die aufgezeichneten Multikanalsignale und multivariaten Signale zu erzeugen, wobei das rekurrente künstliche neuronale Netzwerk eine einzelne Gewichtsmatrix aufweist und derart trainiert wird, dass es die Parameter synthetisiert, welche angeben, wie die Kanäle ihre Interaktion parallel bewältigt haben; und einem zweiten Schritt der Verarbeitung, in welchem die Gewichtungen der Verbindungen zwischen den Knoten des rekurrenten neuronalen Netzwerks, die in dem ersten Verarbeitungsschritt bestimmt wurden, durch ein zweites rekurrentes künstliches neuronales Netzwerk verarbeitet werden, das eine Klassifizierung der von einer Quelle oder einem Objekt kommenden Signale erstellt, wobei es sich um die in das zweite neuronale Netzwerk eingegebenen Gewichtungen der Verbindungen handelt.

2. Verfahren nach Anspruch 1, **dadurch gekennzeichnet, dass** das rekurrente neuronale Netzwerk vom nicht überwachten Typ ist.

3. Verfahren nach Anspruch 1, **dadurch gekennzeichnet, dass** das rekurrente neuronale Netzwerk so viele Eingabeknoten aufweist wie Kanäle vorhanden sind, und so viele Ausgabeknoten aufweist wie Kanäle vorhanden sind.

4. Verfahren nach einem oder mehreren der vorangehenden Ansprüche, **dadurch gekennzeichnet, dass** eine räumliche und/oder zeitliche graphische Rekonstruktion der Interaktionen zwischen den Kanälen aus den numerischen Daten der Gewichtsmatrix erhalten wird, wobei die Gewichtsmatrix aus so vielen Zeilen und so vielen Spalten besteht wie Kanäle vorhanden sind, und wobei jeder Spalte und jeder Zeile ein Kanal zugeordnet ist, wobei jedes Element der Gewichtsmatrix als Beschreiber der Beziehung zwischen den beiden Kanälen definiert ist, welche der Spalte und der Zeile zugeordnet sind, welche die Position des Elements definieren, und der Absolutwert des Elements in Beziehung zu der Intensität der Beziehung zwischen den beiden Kanälen steht, wobei das Vorzeichen des Elements entweder eine verstärkende oder eine hemmende Beziehung angibt.

5. Verfahren nach einem oder mehreren der vorangehenden Ansprüche, **dadurch gekennzeichnet, dass** ein zusätzlicher Verarbeitungsschritt vorgesehen ist, der in der erneuten Verarbeitung der Gewichtsmatrix für jedes Objekt oder jede Quelle unter Verwendung eines rekurrenten neuronalen Netzwerks besteht, um eine Komprimierung von Eingangsdaten zu erreichen, wobei das Netzwerk in diesem Fall so viele Eingänge wie durch eine vorhergehende Verarbeitung der multivariaten Mehrkanal-Signale durch ein rekurrentes neuronales Netzwerk erhaltene Komponenten der Gewichtsmatrix und, in Abhängigkeit von der gewünschten Komprimierung, eine verringerte Anzahl an Ausgängen aufweist.

6. Verfahren nach einem oder mehreren der vorangehenden Ansprüche, **dadurch gekennzeichnet, dass** es die folgenden Schritte aufweist:

   Vorsehen mindestens eines Objekts oder einer Quelle, die geeignet ist, verschiedene zeitabhängige Signale zu erzeugen;
   Erfassen jedes dieser Signale auf einem separaten Kanal und in dem selben Zeitintervall mit identischen Start- und Endzeitpunkten für sämtliche Signale aller Kanäle aufweist;
   Abtasten der Signale jedes Kanals und Erzeugen einer Datenmatrix, in welcher jede Zeile einem der Kanäle entspricht und jede Spalte dem Abtastwert des Signals jedes Kanals in dem entsprechenden Abtastintervall entspricht;
   Vorsehen eines rekurrenten neuronalen Netzwerks, das so viele Eingabeknoten wie Ausgabeknoten aufweist;
   Trainieren des rekurrenten neuronalen Netzwerks, so dass die Gewichtsmatrix die Hyperoberfläche beschreibt, welche die Interaktionen zwischen den Kanälen synthetisiert;
   Zuordnen der derart erhaltenen Gewichtsmatrix als Matrizen von Variablen, welche das Objekt oder die Quelle, d.h. die Aufzeichnungen des Objekts oder der Quelle, charakterisieren.

7. Verfahren nach Anspruch 6, **dadurch gekennzeichnet, dass** es die Verarbeitung der aus der parallelen Verarbeitung der verschiedenen Kanalsignale des Objekts oder der Quelle erhaltenen Gewichtsmatrix durch einen Komprimierungsalgorithmus aufweist, um die Anzahl der diese Gewichtsmatrix bildenden Elemente zu verringern, und ferner das Filtern der noch in dem Signal enthaltenen Rauschkomponenten aufweist.

8. Verfahren nach Anspruch 7, **dadurch gekennzeichnet, dass** die Komprimierung erreicht wird, indem die Gewichtsmatrix durch ein rekurrentes neuronales Netzwerk verarbeitet wird, das so viele Eingänge wie Gewichtsmatrixkomponenten und weniger Ausgänge als Eingänge aufweist.

9. Verfahren zur Klassifizierung von Objekten oder Quellen multivariater Mehrkanalsignale, wobei die Signale durch einen Klassifizierungsalgorithmus, wie ein überwachtes neuronales Netzwerk, ein Clustering-Algorithmus oder dergleichen, verarbeitet werden, wobei die Gewichtsmatrix entsprechend den Schritten nach einem oder mehreren der vorangehenden Ansprüche 1 bis 7 bestimmt und gegebenenfalls komprimiert wird, wobei sie als Aufzeichnung zur Wiedergabe jedes Objekts oder jeder Quelle verwendet wird.

10. Verfahren nach Anspruch 9, bei welchem die folgenden Schritte vorgesehen sind:

    Vorsehen einer Datenbank von Objekten und Quellen von Mehrkanal- und multivariaten Signalen, deren Klassifizierung nach vorbestimmten Qualitäten und Charakteristiken bekannt ist;
    Verarbeiten der aus den Kanälen der Objekte oder Quellen kommenden Signale unter Verwendung eines rekurrenten neuronalen Netzwerks und/oder gegebenenfalls auch zu einer Stufe der Komprimierung der Komponenten der erhaltenen Gewichtsmatrix nach einem oder mehreren der vorangehenden Ansprüche 1 bis 8;
    Transformieren zu einem Vektor durch Ausrichten der Zeilen der nicht komprimierten oder komprimierten Gewichtsmatrix;
    Definieren numerischer Parameter für die ausschließliche Wiedergabe der bekannten und vorbestimmten Qualität oder Charakteristik;
    Trainieren und Testen eines prädiktiven Algorithmus durch Vorgeben des Vektors für die Wiedergabe der numerischen Werte der Gewichtsmatrix, entweder nicht komprimiert oder komprimiert, als Eingang, und der Parameter für die ausschließliche Wiedergabe der bekannten und vorbestimmten Qualität oder Charakteristik als Ausgang;
    Detektieren der Multikanal- und multivariaten Signale eines oder mehrerer zusätzlicher Objekte oder einer oder mehrerer zusätzlicher Quellen, für welche die vorbestimmte Qualität oder Charakteristik nicht bekannt ist;
    Verarbeiten der Signale aus den Kanälen für jedes Objekt oder jede Quelle unter Verwendung eines rekurrenten neuronalen Netzwerks und Bestimmen der Gewichtsmatrix nach dem in einem oder mehreren der Ansprüche 1 bis 8 beanspruchten Verfahren;
    gegebenenfalls Reduzieren der Anzahl der numerischen Komponenten der Gewichtsmatrix durch Komprimieren gemäß den Ansprüchen 4 oder 8;

Transponieren der numerischen Werte der nicht komprimierten oder komprimierten vektorartigen Gewichtsmatrix durch Anordnen der numerischen Elemente der Zeilen der komprimierten oder nicht komprimierten Gewichtsmatrix auf einer einzelnen Zeile;

Verarbeiten der vektorartigen komprimierten oder nicht komprimierten Gewichtsmatrix unter Verwendung des trainierten prädiktiven Algorithmus und Bestimmen der vordefinierten Qualitäten oder Charakteristiken des Objekts oder der Quelle aus den Ausgabeparametern des prädiktiven Algorithmus, die durch die Verarbeitung erhalten werden.

11. Verfahren nach Anspruch 10, **dadurch gekennzeichnet, dass** ein sogenanntes überwachtes neuronales Netzwerk als prädiktiver Algorithmus verwendet wird.

12. Verfahren nach Anspruch 9, **dadurch gekennzeichnet, dass** ein Clustering-Algorithmus als Klassifizierungsalgorithmus verwendet wird.

13. Verfahren nach Anspruch 12, **dadurch gekennzeichnet, dass** der Clustering-Algorithmus eine sogenannte selbstorganisierende Karte ist.

14. Verfahren nach einem oder mehreren der vorangehenden Ansprüche, **dadurch gekennzeichnet, dass** es zur Verarbeitung von Mehrkanalsignalen von Elektroenzephalogrammen (EEG) verwendet wird.

15. Verfahren nach Anspruch 14, **dadurch gekennzeichnet, dass** es zur Verarbeitung von Mehrkanalsignalen von Elektroenzephalogrammen von potentiell unter der Alzheimer-Krankheit leidenden Patienten verwendet wird, wobei es sich bei den Objekten und Quellen um einen Patienten bzw. m Elektroenzephalogramm-Muster des Patienten handelt.

16. Verfahren nach Anspruch 15, **dadurch gekennzeichnet, dass** für jeden Patienten

enzephalographische Muster mehrerer verschiedener Bereiche des Gehirns separat auf unterschiedlichen Kanälen innerhalb des selben Zeitintervalls detektiert werden, der für sämtliche Kanäle den gleichen Startzeitpunkt und den gleichen Endzeitpunkt aufweist;

die Signale von Mustern abgetastet werden, wodurch eine Matrix erzeugt wird, bei welcher die Zeilen durch die numerischen Kanalabtastungswerte gebildet sind;

wobei die Datenmatrix durch ein rekurrentes neuronales Netzwerk verarbeitet wird, das so viele Eingabeknoten und Ausgabeknoten aufweist wie Kanäle vorhanden sind, wobei die durch diese Verarbeitung erhaltene Gewichtsmatrix als Matrix für die Aufzeichnungen eines jeden Objekts verwendet wird;

gegebenenfalls, jedoch ohne Einschränkung, die Gewichtsmatrix für jede Objekt weiter einer Komprimierung unter Verwendung eines rekurrenten neuronalen Netzwerks unterzogen wird, das so viele Eingänge wie in dem vorhergehenden Schritt bestimmte Elemente der Gewichtsmatrix und weniger Ausgänge aufweist.

17. Verfahren nach einem der Ansprüche 14 bis 16, **dadurch gekennzeichnet, dass** die Gewichtsmatrix nach dem Verfahren von Anspruch 8 zum Erzeugen einer Raum-Zeit-Karte der Interaktionen zwischen den jedem der Kanäle zugeordneten Gehirnbereichen verwendet wird.

18. Verfahren nach einem oder mehreren der Ansprüche 14 bis 17, **dadurch gekennzeichnet, dass** es als Verfahren zum Klassifizieren von Objekten verwendet wird, bei denen das Vorhandensein oder das Nichtvorhandensein einer neurologischen Krankheit nicht bekannt ist.

19. Verfahren nach Anspruch 18, **dadurch gekennzeichnet, dass** es als Verfahren zum Klassifizieren von Objekten verwendet wird, bei denen das Vorhandensein oder das Nichtvorhandensein einer Erkrankung an der Alzheimer-Krankheit nicht bekannt ist.

20. Verfahren nach Anspruch 18 oder 19, **dadurch gekennzeichnet, dass** es die folgenden Schritte aufweist:

Bereitstellen einer Datenbank bekannter Fälle mit einer vorbestimmten Anzahl von Objekten, deren pathologischer Alzheimer-Erkrankungszustand bekannt ist;

Unterziehen jedes der Objekte einer enzephalographischen Untersuchung und Aufzeichnen der Signale jedes der Kanäle des Elektroenzephalogramms;

Verarbeiten der Multikanalsignale des Enzephalogramms für jedes Objekt durch Abtasten und Verarbeiten derselben durch ein rekurrentes neuronales Netzwerk gemäß dem Verfahren nach einem oder mehreren der

EP 2 027 559 B1

Ansprüche 1 bis 8;

Verwenden der durch die rekurrente Gewichtsmatrix bestimmten und gegebenenfalls weiter komprimierten Gewichtsmatrix und der Parameter zur Wiedergabe des pathologischen Zustands bezüglich des Vorhandenseins der Alzheimer-Krankheit, um ein überwachtes neuronales Netzwerk zu trainieren, indem als Eingangsdaten die numerischen Werte der Gewichtsmatrix, gegebenenfalls komprimiert, oder in einer Form, in welcher die numerischen Komponenten in vektorartiger Form entlang einer einzelnen Zeile angeordnet sind, vorgesehen sind, und als Ausgangsdaten des überwachten neuronalen Netzwerks die Parameter zur Wiedergabe des pathologischen Zustands geliefert werden;

Klassifizieren eines Objekts von unbekanntem pathologischem Zustand unter Verwendung des überwachten neuronalen Netzwerks, das mittels der folgenden Schritte trainiert wurde:

Erfassen der Signale der Elektroenzephalogrammkanäle für das Objekt und Erstellen einer Datenmatrix, die aus einer einzelnen Zeile pro Kanal und das entsprechende abgetastete Signal gebildet ist;

Bestimmen der Gewichtsmatrix eines rekurrenten neuronalen Netzwerks mit ebenso vielen Eingabeknoten wie Ausgabeknoten und Kanälen;

Verwenden einer derartigen Gewichtsmatrix, die gegebenenfalls in Bezug auf die numerischen Elemente derselben weiter komprimiert ist, als eine das Objekt repräsentierende Aufzeichnung;

Transponieren der numerischen Daten der Gewichtsmatrix, gegebenenfalls komprimiert, in eine Vektorform, d.h. Transponieren sämtlicher Zeilen in eine einzige Zeile;

Bestimmen der Ausgangsparameter des überwachten neuronalen Klassifizierungsnetzwerks, indem dem Netzwerk die numerischen Werte der gegebenenfalls komprimierten Gewichtsmatrix, in eine Vektorform transponiert, als Eingangsdaten geliefert werden.

## Revendications

1. Procédé de traitement d'une séquence d'au moins deux signaux médicaux multivariables, ou davantage, provenant d'une source ou d'un objet donné, selon lequel chaque signal est soumis à un traitement pour classifier les signaux, **caractérisé en ce que** les signaux provenant de chaque canal sont soumis à

   une première opération de traitement au moyen d'un réseau neuronal artificiel à rebouclage faisant l'objet d'un apprentissage sur les signaux afin de générer les signaux multicanaux et multivariables, enregistrés, lequel réseau neuronal artificiel à rebouclage présente une matrice de poids unique et fait l'objet d'un apprentissage de manière à synthétiser les paramètres indiquant comment les canaux ont négocié leur interaction en parallèle ;

   et une seconde opération de traitement dans laquelle les poids des connexions entre les noeuds du réseau neuronal à rebouclage déterminé dans la première étape de traitement sont traités au moyen d'un second réseau neuronal artificiel qui fournit une classification desdits signaux provenant d'une source ou d'un objet donné, lesdits poids des connexions formant entrée dans ledit second réseau neuronal.

2. Procédé suivant la revendication 1, **caractérisé en ce que** le réseau neuronal à rebouclage est du type non supervisé.

3. Procédé tel que revendiqué à la revendication 1, **caractérisé en ce que** le réseau neuronal à rebouclage présente autant de noeuds d'entrée qu'il existe de canaux et autant de noeuds de sortie qu'il existe de canaux.

4. Procédé tel que revendiqué dans une ou plusieurs des revendications précédentes, **caractérisé en ce qu'**une reconstruction graphique dans l'espace et/ou dans le temps des interactions entre les canaux est obtenue à partir des données numériques de la matrice de poids, la matrice de poids étant constituée d'autant de lignes et d'autant de colonnes que de canaux, et chaque colonne et chaque ligne présentant un canal qui lui est associé, tandis que chaque élément de la matrice de poids est défini en tant que descripteur de la relation entre les deux canaux associés à la ligne et la colonne qui définissent la position dudit élément et la valeur absolue dudit élément est liée à l'intensité de la relation entre lesdits deux canaux, tandis que le signe dudit élément définit soit une relation de renforcement, soit une relation d'inhibition.

5. Procédé tel que revendiqué dans une ou plusieurs des revendications précédentes, **caractérisé en ce qu'**il est prévu une opération de traitement supplémentaire qui consiste à traiter à nouveau la matrice de poids pour chaque objet ou chaque source en utilisant un réseau neuronal à rebouclage, afin d'obtenir une compression de données d'entrée, le réseau présentant dans ce cas autant d'entrées que de composants de la matrice de poids obtenue à partir d'un traitement précédent des signaux multivariables, multicanaux au moyen d'un réseau neuronal à rebou-

29

clage et un nombre réduit de sorties, en fonction de la compression désirée.

6. Procédé tel que revendiqué dans une ou plusieurs des revendications précédentes, **caractérisé en ce qu'**il comporte les opérations suivantes :

la fourniture d'au moins un objet ou une source adapté pour générer des signaux dépendants du temps différents ;
la détection de chacun de ces signaux sur un canal séparé et dans le même intervalle de temps, présentant des instants initial et final identiques pour tous les signaux de tous les canaux ;
l'échantillonnage des signaux de chaque canal et la production d'une matrice de données dans laquelle chaque ligne correspond à l'un des canaux et chaque colonne correspond à la valeur d'échantillonnage du signal de chaque canal dans l'intervalle d'échantillonnage correspondant ;
la fourniture d'un réseau neuronal à rebouclage comportant autant de noeuds d'entrée que de noeuds de sortie ;
la soumission à un apprentissage du réseau neuronal à rebouclage de sorte telle que la matrice de poids décrive l'hypersurface qui synthétise les interactions entre les canaux ;
l'association de la matrice de poids ainsi obtenue en tant que matrices de variables qui caractérisent l'objet ou la source, c'est-à-dire les enregistrements de l'objet ou de la source.

7. Procédé tel que revendiqué à la revendication 6, **caractérisé en ce qu'**il comprend le fait de traiter la matrice de poids obtenue à partir d'un traitement parallèle des divers signaux de canal de l'objet ou de la source, au moyen d'un algorithme de compression afin de réduire le nombre d'éléments composant ladite matrice de poids et de filtrer en outre les composantes de bruit encore contenues dans le signal.

8. Procédé tel que revendiqué à la revendication 7, **caractérisé en ce que** ladite compression est obtenue en traitant la matrice de poids au moyen d'un réseau neuronal à rebouclage présentant autant d'entrées que de composants de matrice de poids et moins de sorties que d'entrées.

9. Procédé permettant de classifier des objets ou des sources de signaux multivariables multicanaux, selon lequel lesdits signaux sont traités au moyen d'un algorithme de classification tel qu'un réseau neuronal supervisé, un algorithme de groupement ou analogue, la matrice de poids déterminée conformément aux opérations définies dans une ou plusieurs des revendications précédentes 1 à 7, éventuellement comprimée, étant utilisée en temps qu'enregistrement pour représenter chaque objet ou chaque source.

10. Procédé tel que revendiqué à la revendication 9, selon lequel il est prévu les opérations suivantes :

la fourniture d'une base de données d'objets ou de sources de signaux multicanaux et multivariables, dont une classification en fonction de qualités ou de caractéristiques préfixées est connue ;
le traitement des signaux provenant des canaux desdits objets ou desdites sources en utilisant un réseau à rebouclage et/ou éventuellement également une opération de compression des composants de la matrice de poids obtenue conformément à une ou plusieurs des revendications 1 à 8 précédentes ;
la transformation par alignement des lignes de la matrice de poids non comprimée ou comprimée en un vecteur ;
la définition de paramètres numériques pour représenter d'une manière unique la qualité ou la caractéristique connue et préfixée ;
la soumission à un apprentissage et le test d'un algorithme prédictif par imposition du vecteur servant à représenter les valeurs numériques de la matrice de poids, soit non comprimée, soit comprimée, en tant qu'entrée, et des paramètres servant à représenter d'une manière unique la qualité ou la caractéristique connue et préfixée, en tant que sortie ;
la détection de signaux multicanaux et multivariables d'un ou de plusieurs objets supplémentaires ou d'une ou de plusieurs sources supplémentaires dont la qualité ou la caractéristique préfixée n'est pas connue ;
le traitement des signaux provenant des canaux pour chaque objet ou chaque source en utilisant un réseau neuronal à rebouclage et la détermination de la matrice de poids conformément au procédé tel que revendiqué dans une ou plusieurs des revendications 1 à 8 ;
éventuellement la réduction du nombre de composants numériques de la matrice de poids par compression comme revendiqué à la revendication 4 ou 8 ;
la transposition des valeurs numériques de la matrice de poids non comprimée ou comprimée, en forme de vecteur, par arrangement sur une ligne unique des éléments numériques des lignes de ladite matrice de poids comprimée ou non comprimée ;
le traitement de la matrice de poids comprimée ou non comprimée, en forme de vecteur, par l'utilisation de l'algorithme prédictif soumis à apprentissage et la détermination des qualités ou des caractéristiques préfixées de l'objet ou de la source à partir des paramètres de sortie dudit algorithme prédictif prévu par ledit traitement.

11. Procédé tel que revendiqué à la revendication 10, **caractérisé en ce que** ce qu'il est convenu d'appeler un réseau neuronal supervisé est utilisé en tant qu'algorithme prédictif.

12. Procédé tel que revendiqué à la revendication 9, **caractérisé en ce qu'**un algorithme de groupement est utilisé en tant qu'algorithme de classification.

13. Procédé tel que revendiqué à la revendication 12, **caractérisé en ce que** l'algorithme de groupement est ce qu'il est convenu d'appeler une Carte Auto-Organisatrice.

14. Procédé tel que revendiqué dans une ou plusieurs des revendications précédentes, **caractérisé en ce qu'**il est utilisé pour traiter des signaux multicanaux d'électroencéphalogrammes (EEG).

15. Procédé tel que revendiqué à la revendication 14, **caractérisé en ce qu'**il est utilisé pour traiter des signaux multicanaux d'électroencéphalogrammes de patients éventuellement souffrant de maladie d'Alzheimer, les objets ou les sources étant respectivement un patient et des profils d'électroencéphalogramme dudit patient.

16. Procédé tel que revendiqué à la revendication 15, **caractérisé en ce que**, pour chaque patient :

des profils encéphalographiques de plusieurs zones différentes du cerveau sont détectés, séparément sur différents canaux, dans le même intervalle de temps présentant le même instant initial et le même instant final sur tous les canaux ;
les signaux de profils sont échantillonnés, de sorte qu'est générée une matrice dans laquelle les lignes sont formées par les valeurs d'échantillonnage de canal numériques;
ladite matrice de données est traitée au moyen d'un réseau neuronal à rebouclage comportant autant de noeuds d'entrée et de noeuds de sortie qu'il existe de canaux, tandis que la matrice de poids obtenue à partir d'un tel traitement est utilisée en tant que matrice des enregistrements de chaque objet ;
éventuellement, mais sans limitation, la matrice de poids correspondant à chaque objet est en outre soumise à une compression en utilisant un réseau neuronal à rebouclage comportant autant d'entrées que les éléments de la matrice de poids déterminée dans l'opération précédente, et un moins grand nombre de sorties.

17. Procédé tel que revendiqué dans une ou plusieurs des revendications 14 à 16, **caractérisé en ce que** la matrice de poids est utilisée pour générer une carte espace-temps des interactions entre les zones du cerveau associées à chaque canal, conformément au procédé de la revendication 5.

18. Procédé tel que revendiqué dans une ou plusieurs des revendications 14 à 17, **caractérisé en ce qu'**il est utilisé en tant que procédé pour classifier des objets dont la présence ou l'absence d'une maladie neurologique est non connue.

19. Procédé tel que revendiqué à la revendication 18, **caractérisé en ce qu'**il est utilisé en tant que procédé pour classifier des objets dont la présence ou l'absence de maladie d'Alzheimer est non connue.

20. Procédé tel que revendiqué à la revendication 18 ou 19, **caractérisé en ce qu'**il comprend les opérations suivantes :

la fourniture d'une base de données de cas connus, comprenant un nombre préfixé d'objets dont la condition de maladie d'Alzheimer pathologique est connue ;
la soumission de chacun desdits objets à un examen encéphalographique, et l'enregistrement des signaux de chaque canal de l'électroencéphalogramme ;
le traitement desdits signaux multicanaux de l'encéphalogramme pour chaque objet par échantillonnage et traitement de ceux-ci au moyen d'un réseau neuronal à rebouclage conformément au procédé tel que revendiqué dans une ou plusieurs des revendications 1 à 8 ;
l'utilisation de la matrice de poids déterminée par ladite matrice de poids à rebouclage, et éventuellement en outre comprimée, et les paramètres servant à représenter la condition pathologique à l'égard de la présence de maladie d'Alzheimer, pour soumettre à un apprentissage un réseau neuronal supervisé, par fourniture, en tant que données d'entrée, des valeurs numériques de la matrice de poids, éventuellement comprimée, ou sous une forme dans laquelle les composants numériques de ladite matrice sont agencés sous une forme analogue à un vecteur, sur l'étendue d'une ligne unique, et en tant que données de sortie dudit réseau neuronal supervisé, les paramètres servant à représenter la condition pathologique ;

la classification d'un objet de condition pathologique non connue, par utilisation dudit réseau neuronal supervisé, lequel a été soumis à un apprentissage avec les opérations suivantes :

la détection des signaux des canaux d'électroencéphalogramme correspondant audit objet et la construction d'une matrice de données formée d'une ligne unique par canal et par le signal échantillonné correspondant ;

la détermination de la matrice de poids d'un réseau neuronal à rebouclage présentant autant de noeuds d'entrée que de noeuds de sortie et que de canaux ;

l'utilisation d'une telle matrice de poids, éventuellement en outre comprimée à l'égard des éléments numériques de celle-ci, en tant qu'enregistrement représentatif de l'objet ;

la transposition des données numériques de ladite matrice de poids, éventuellement comprimée, en une forme de vecteur, c'est-à-dire avec toutes les lignes en une ligne unique ;

la détermination des paramètres de sortie du réseau neuronal supervisé de classification, en fournissant audit réseau les valeurs numériques de la matrice de poids éventuellement comprimée, transposée en une forme de vecteur, en tant que données d'entrée.

Fig. 1

Set of experiments or phenomena under observation or sequence of repeated experiments or observed phenomena

Matrices obtained from signal sampling

AUTO-ASSOCIATIVE NEURAL NETWORK

Weight matrices representing the records for each object and describing the interrelations among the signals from the various channels

Fig. 2

EP 2 027 559 B1

From channel

|  | c1 | c2 | c3 | c4 | c5 |
|---|---|---|---|---|---|
| c1 |  |  |  |  |  |
| c2 |  |  |  |  |  |
| c3 |  |  |  |  |  |
| c4 |  |  |  |  |  |
| c5 |  |  |  |  |  |

To channel

Weight matrix provided by the auto-associative neural network

Fig. 3

Map of channel interactions

c4  c2  c1  c5  c3

EP 2 027 559 B1

Fig. 4

EP 2 027 559 B1

Auto Associative Back Propagation with two layers

Fig.5

Fig.6

# Multi-Layer Perceptron

Fig. 7

# Auto-Associative Hidden Recurrent

Fig. 8

Multi-Layer Perceptron

(I.F.A.S.T. :Noise Reduction)

## Fig. 9

I.F.A.S.T. : Noise reduction

## Fig. 10

# Validation Protocol – 5x2 CV

Fig. 11

Arrangement of objects in the matrix          Frequencies of 110 TOTs

SOM

10x10
matrix
128 variables

101
Objects in total
(CTR)

61
controls
(CTR)

40
Alzheimer
(AD)

Fig. 12

Frequencies of 61 CTRs          Frequencies of 40 ADs

EP 2 027 559 B1

# Codebooks

From this overview, codebooks seem to be very similar .
No peculiar codebook characteristics to represent AD patients, as compared with CTR
patients can be visually distinguished.

## Fig. 13

EP 2 027 559 B1

# Variables

When considering the distribution of variables in the weight matrix, there is an evidence that a higher uniformity of the variable value exists in the areas in which the AD objects are distributed.

## Fig. 14

EP 2 027 559 B1

# MACRO-CLASSES

In this representation, the value of each class (matrix unit) is analyzed with its neighborhood composed of eight surrounding units. It will be appreciated that the group of units that classify the AD cases forms a single macro-class.

The units that classify the CTR cases do not form groups, but are often arranged around empty units which form intermediate codebooks.

Fig. 15

EP 2 027 559 B1

| ID | Test File | Sex | Age | MMSE |
|---|---|---|---|---|
| 1 | 0 ansann nna | f | 79 | 18 |
| 2 | 0 barang nna | f | 81 | 16 |
| 3 | 0 beroce nna | M | 83 | 17 |
| 4 | 0 bobgu nna | f | 81 | 22 |
| 5 | 0 calba nna | f | 70 | 26 |
| 6 | 0 camalb nna | f | 83 | 21 |
| 7 | 0 cannnar nna | f | 75 | 27 |
| 8 | 0 capcar nna | f | 78 | 19 |
| 9 | 0 carln nna | f | 81 | 27 |
| 10 | 0 carln nna | f | 82 | 21 |
| 11 | 0 catant nna | M | 90 | 26 |
| 12 | 0 cerser nna | M | 77 | 24 |
| 13 | 0 coseh nna | f | 74 | 26 |
| 14 | 0 coslar nna | f | 78 | 21 |
| 15 | 0 depeda nna | M | 76 | 25 |
| 16 | 0 diaga2 nna | f | 82 | 26 |
| 17 | 0 drann nna | f | 77 | 24 |
| 18 | 0 fargu nna | M | 82 | 28 |
| 19 | 0 fnnar nna | M | 65 | 24 |
| 20 | 0 fitros nna | f | 67 | 25 |
| 21 | 0 genlu nna | f | 61 | 27 |
| 22 | 0 gialn nna | f | 81 | 26 |
| 23 | 0 gianm nna | f | 79 | 18 |
| 24 | 0 gindr nna | f | 79 | 16 |
| 25 | 0 graann nna | M | 76 | 26 |
| 26 | 0 lordn nna | f | 77 | 23 |
| 27 | 0 losaur nna | M | 77 | 28 |
| 28 | 0 lupvas nna | M | 80 | 23 |
| 29 | 0 maram nna | f | 73 | 29 |
| 30 | 0 masmar nna | f | 83 | 22 |
| 31 | 0 mauter nna | f | 90 | 21 |
| 32 | 0 morang nna | f | 74 | 20 |
| 33 | 0 parcan nna | f | 79 | 24 |
| 34 | 0 pasmar nna | f | 90 | 22 |
| 35 | 0 percar nna | f | 76 | 24 |
| 36 | 0 porcar nna | f | 74 | 22 |
| 37 | 0 quiln nna | f | 77 | 26 |
| 38 | 0 raznes nna | f | 83 | 23 |
| 39 | 0 sgrnc nna | f | 83 | 26 |
| 40 | 0 valluc nna | f | 76 | 18 |
| 41 | 1 acogu nna | f | 89 | nom |
| 42 | 1 afegu nna | f | 68 | nom |
| 43 | 1 ansenn nna | f | 83 | nom |
| 44 | 1 banpe nna | M | 67 | nom |
| 45 | 1 basaur nna | f | 79 | nom |
| 46 | 1 camalb nna | f | 62 | nom |
| 47 | 1 baslu nna | f | 67 | nom |
| 48 | 1 barmar nna | f | 67 | nom |
| 49 | 1 borda nna | M | 74 | nom |
| 50 | 1 calmar nna | f | 65 | nom |
| 51 | 1 camfar nna | M | 80 | nom |

Controls

Controls

| ID | File |
|---|---|
| 11 | catant nna |
| 23 | gianm nna |
| 27 | losaur nna |
| 24 | gindr nna |
| 15 | depeda nna |
| 32 | morang nna |
| 5 | calba nna |
| 39 | sgrnc nna |
| 38 | raznes nna |
| 34 | pasmar nna |
| 8 | capcar nna |
| 28 | lupvas nna |
| 19 | fnnar nna |
| 12 | cerser nna |
| 9 | carln nna |
| 16 | diaga2 nna |
| 30 | masmar nna |
| 3 | beroce nna |
| 6 | camalb nna |
| 25 | graann nna |
| 74 | manch nna |
| 97 | strger nna |
| 55 | cocmar nna |
| 96 | scoser nna |
| 81 | pagang nn |
| 98 | tallar nna |
| 92 | nsgro nna |
| 58 | dexter nna |
| 63 | tonass nna |
| 45 | basaur nna |
| 91 | rannar nna |
| 50 | calmar nna |
| 95 | sbarda nna |
| 73 | madann nna |
| 44 | banpe nna |
| 48 | barmar nna |
| 90 | dirncg nna |
| 83 | pastra nna |
| 49 | borda nna |
| 62 | fargo nna |
| 82 | palgo nna |
| 54 | exdra nna |
| 85 | perfra nna |
| 75 | marott nna |
| 72 | taumar nna |
| 53 | casmar nna |
| 56 | cucnie nna |
| 41 | acogu nna |
| 70 | tanlu nna |
| 61 | felam nna |
| 46 | camalb nna |

| ID | Test File | Sex | Age | MMSE |
|---|---|---|---|---|
| 52 | 1 cannar nna | f | 85 | nom |
| 53 | 1 casmar nna | f | 70 | nom |
| 54 | 1 exdra nna | f | 63 | nom |
| 55 | 1 cocmar nna | M | 65 | nom |
| 56 | 1 cucnie nna | M | 74 | nom |
| 57 | 1 damant nna | f | 64 | nom |
| 58 | 1 dexter nna | f | 78 | nom |
| 59 | 1 dezmo nna | f | 82 | nom |
| 60 | 1 dirncg nna | M | 63 | nom |
| 61 | 1 felam nna | f | 70 | nom |
| 62 | 1 fargo nna | M | 61 | nom |
| 63 | 1 tonass nna | f | 83 | nom |
| 64 | 1 gannar nna | f | 73 | nom |
| 65 | 1 gascos nna | M | 71 | nom |
| 66 | 1 gatch nna | M | 71 | nom |
| 67 | 1 iennic nna | M | 82 | nom |
| 68 | 1 imalu nna | f | 66 | nom |
| 69 | 1 lagtra nna | M | 75 | nom |
| 70 | 1 tanlu nna | M | 74 | nom |
| 71 | 1 lasmar nna | f | 69 | nom |
| 72 | 1 taumar nna | f | 70 | nom |
| 73 | 1 madann nna | f | 63 | nom |
| 74 | 1 manch nna | M | 76 | nom |
| 75 | 1 marott nna | M | 74 | nom |
| 76 | 1 masonn nna | f | 82 | nom |
| 77 | 1 mermad nna | f | 64 | nom |
| 78 | 1 morlux nna | f | 67 | nom |
| 79 | 1 okgu nna | f | 67 | nom |
| 80 | 1 orcang nna | M | 66 | nom |
| 81 | 1 pagang nna | f | 71 | nom |
| 82 | 1 palgo nna | f | 65 | nom |
| 83 | 1 pastra nna | M | 67 | nom |
| 84 | 1 perdonn nna | M | 70 | nom |
| 85 | 1 perfra nna | M | 78 | nom |
| 86 | 1 procar nna | f | 76 | nom |
| 87 | 1 pilang nna | f | 84 | nom |
| 88 | 1 pissal nna | M | 74 | nom |
| 89 | 1 pdmar nna | M | 85 | nom |
| 90 | 1 pursal nna | M | 77 | nom |
| 91 | 1 rannnc nna | f | 70 | nom |
| 92 | 1 nsgro nna | f | 77 | nom |
| 93 | 1 rosann nna | f | 65 | nom |
| 94 | 1 roseh nna | f | 78 | nom |
| 95 | 1 sbarda nna | f | 65 | nom |
| 96 | 1 scoser nna | M | 62 | nom |
| 97 | 1 strger nna | f | 70 | nom |
| 98 | 1 tallar nna | f | 76 | nom |
| 99 | 1 turadr nna | f | 70 | nom |
| 100 | 1 vastur nna | M | 63 | nom |
| 101 | 1 zerda nna | f | 72 | nom |

# Fig.16

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **Robi Polikar ; Mary Helen Geer ; Lalita Udpa.** Multiresolution Wavelet Analysis of ERPs for the Detection of Alzheimer's Disease. *Fritz Keinert Proceedings -19th International Conference IEEE/EMBS,* 30 October 1997
- EEG filtering based on blind source separation (BSS) for early detection of Alzheimer's disease. **Andrzej Cichocki ; Sergei L. Shishkin ; Tomshimitsu Misha ; Zbigniew Loenowicz ; Takashi Asada, Tayakoshi Kurachi.** Clinical Neurophysiology. Elsevier Ireland Ltd, 2004, vol. xx, 1-9
- **Co Melissant ; Alexander Ypma ; Edward E.E: Friteman ; Cornelis J. Stam.** A method for detection of Alzheimer's disease using ICA-enhanced EEG measurements. *Artificial Intelligence in medicine,* 2005, vol. 33, 209-22
- Reti Neurali Artificiali e Sistemi sociali Complessi Volume I- Teoria e Modelli. Massimo Buscema e Semeion Group, 1999, vol. I
- Elements of Artificial Neural Networks, Kisham Mehrotra. **Chilukukri K. Mohan ; Sanjay Ranka.** A Bradford Book. The Mit Press, 1997
- **J. Liszka-Hackzell.** Categorization of Fetal Heart Rate Patterns Using Neural Networks. *Journal of Medical Systems,* 2001, vol. 25 (4), 269-276
- **Alguindigue et al.** Automatic fault recognition of mechanical components using coupled artificial neural networks. *IEEE World Congress on Computational Intelligence, IEEE International Conference on Neural Networks,* 27 July 1994, vol. 5, 3312-3317
- Schemata and Sequential Thought Processes in PDP Models. **Rumelhart D.E. ; Smolensky P. ; McClelland J.L. ; Hinton G.E. ; McClelland J.L. ; Rumelhart D.E.** Exploration in the Microstructure of Cognition. The MIT Press, 1986, vol. II
- Constraint Satisfaction Neural Networks. **Buscema M.** Special Issue on Artificial Neural Networks and Complex Social Systems, Substance Use and Misuse. 1998, vol. 33, 389-408
- Recirculation Neural Networks. **Buscema M.** Special Issue on Artificial Neural Networks and Complex Social Systems, Substance Use and Misuse. 1998, vol. 33, 383-388
- **G.E.Hinton ; J.L.McClelland.** Learning Representation by Recirculation. *Proceeding of IEEE Conference on Neural Information Processing Systems,* November 1988

- Backpropagation: Theory, Architectures, and Applications. Lawrence Erlbaum Associates, Inc. Publishers, 1995
- **J.L.Elman.** Finding Structure in Time. *Cognitive Science,* 1990, vol. 14, 179-211
- **Rubin EH ; Morris JC ; Grant FA ; Vendegna T.** Very mild senile dementia of the Alzheimer type. *I.Clinical assessment. Arch Neurol.,* April 1989, vol. 46 (4), 379-82
- **Albert M ; Smith LA ; Scherr PA ; Taylor JO ; Evans DA ; Funkenstein HH.** Use of brief cognitive tests to identify individuals in the community with clinically diagnosed Alzheimer's disease. *Int J Neurosci.,* April 1991, vol. 57 (3-4), 167-78
- **Flicker C ; Ferris SH ; Reisberg B.** Mild cognitive impairment in the elderly: predictors of dementia. *Neurology,* July 1991, vol. 41 (7), 1006-9
- **Zaudig M.** A new systematic method of measurement and diagnosis of "mild cognitive impairment" and dementia according to ICD-10 and DSM-III-R criteria. *Int Psychogeriatr.,* 1992, vol. 4 (2), 203-19
- **Devanand DP ; Folz M ; Gorlyn M ; Moeller JR ; Stern Y.** Questionable dementia: clinical course and predictors of outcome. *J Am Geriatr Soc.,* March 1997, vol. 45 (3), 321-8
- **Petersen RC ; Smith GE ; Ivnik RJ ; Tangalos EG ; Schaid DJ ; Thibodeau SN ; Kokmen E ; Waring SC ; Kurland LT.** Apolipoprotein E status as a predictor of the development of Alzheimer's disease in memory-impaired individuals. *JAMA,* 26 April 1995, vol. 273 (16), 1274-8
- **Petersen RC ; Smith GE ; Waring SC ; Ivnik RJ ; Kokmen E ; Tangelos EG.** Aging, memory, and mild cognitive impairment. *Int Psychogeriatr.,* 1997, vol. 9 (1), 65-9
- **Petersen RC ; Doody R ; Kurz A ; Mohs RC ; Morris JC ; Rabins PV ; Ritchie K ; Rossor M ; Thal L ; Winblad B.** Current concepts in mild cognitive. *Current concepts in mild cognitive*
- **McKhann G ; Drachman D ; Folstein M ; Katzman R ; Price D ; Stadlan EM.** Clinical diagnosis of Alzheimer's Disease: report of the NINCDS-ADRDA work group under the auspices of department of Health and Human Services Task Force on Alzheimer's Disease. *Neurology,* 1984, vol. 34, 939-44

- **Folstein MF ; Folstein SE ; McHigh PR.** Mini Mental State: a pratical method for grading the cognitive state of patients for the clinician. *Journal of Psychiatric Research,* 1975, vol. 12, 189-198
- **Hughes CP ; Berg L ; Danziger WL ; Coben LA ; Martin RL.** A new clinical scale for the staging of dementia. *Br J Psychiatry.,* June 1982, vol. 140, 566-72
- **Yesavage JA ; Brink TL ; Rose TL ; Lum O ; Huang V ; Adey M ; Leirer VO.** Development and validation of a geriatric depression screening scale: a preliminary report. *J Psychiatr Res.,* 1982, vol. 17 (1), 37-49
- **Rosen WG ; Terry RD ; Fuld PA ; Katzman R ; Peck A.** Pathological verification of ischemic score in differentiation of dementias. *Ann Neurol.,* May 1980, vol. 7 (5), 486-8
- **Lawton MP ; Brody EM.** Assessment of Older people: Self Maintaining ad Instrumental Activities of Daily Living. *Gerontologist,* 1969, vol. 9, 179-186
- Clinical and neuropathological criteria for fronto-temporal dementia. *J Neurol Neurosurg Psychiatry,* 1994, vol. 57, 416-18
- **Roman GC ; Tatemichi TK ; Erkinjuntti T ; Cummings JL ; Masdeu JC ; Garcia JH ; Amaducci L ; Orgogozo JM ; Brun A ; Hofman A.** Vascular dementia: diagnostic criteria for research studies. Report of the NINDS-AIREN International Workshop. *Neurology,* 1993, vol. 43, 250-60
- **Frisoni GB ; Beltramello A ; Binetti G ; Bianchetti A ; Weiss C ; Scuratti A ; Trabucchi M.** Computed tomography in the detection of the vascular component in dementia. *Gerontology,* 1995, vol. 41 (2), 121-8
- **Galluzzi S ; Sheu CF ; Zanetti O ; Frisoni GB.** Distinctive clinical features of mild cognitive impairment with subcortical cerebrovascular disease. *Dement Geriatr Cogn Disord.,* 2005, vol. 19 (4), 196-203
- **McKeith IG ; Galasko D ; Kosaka K ; Perry EK ; Dickson DW ; Hansen LA et al.** Consensus guidelines for the clinical and pathologic diagnosis of dementia with Lewy bodies (DLB): report of the consortium on DLB international workshop. *Neurology,* 1996, vol. 47 (5), 1113-1124
- **Buchan RJ ; Nagata K ; Yokoyama E ; Langman P ; Yuya H ; Hirata Y ; Hatazawa J ; Kanno I.** Regional correlations between the EEG and oxygen metabolism in dementia of Alzheimer's type. *Electroencephalogr Clin Neurophysiol.,* September 1997, vol. 103 (3), 409-17
- **Pucci E ; Belardinelli N ; Cacchio G ; Signorino M ; Angeleri F.** EEG power spectrum differences in early and late onset forms of Alzheimer's disease. *Clin Neurophysiol.,* April 1999, vol. 110 (4), 621-31
- **Szelies B ; Mielke R ; Kessler J ; Heiss WD.** EEG power changes are related to regional cerebral glucose metabolism in vascular dementia. *Clin Neurophysiol.,* April 1999, vol. 110 (4), 615-20
- **Rodriguez G ; Vitali P ; De Leo C ; De Carli F ; Girtler N ; Nobili F.** Quantitative EEG changes in Alzheimer patients during long-term donepezil therapy. *Neuropsychobiology,* 2002, vol. 46 (1), 49-56
- **Babiloni C ; Ferri R ; Moretti DV ; Strambi A ; Binetti G ; Dal Forno G ; Ferreri F ; Lanuzza B ; Bonato C ; Nobili F.** Abnormal fronto-parietal coupling of brain rhythms in mild Alzheimer's disease: a multicentric EEG study. *Eur J Neurosci.,* May 2004, vol. 19 (9), 2583-90
- **Babiloni C ; Binetti G ; Cassetta E ; Cerboneschi D ; Dal Forno G ; Del Percio C ; Ferreri F ; Ferri R ; Lanuzza B ; Miniussi C.** Mapping distributed sources of cortical rhythms in mild Alzheimer's disease. A multicentric EEG study. *Neuroimage,* May 2004, vol. 22 (1), 57-67
- **Dierks T ; Ihl R ; Frolich L ; Maurer K.** Dementia of the Alzheimer type: effects on the spontaneous EEG described by dipole sources. *Psychiatry Res.,* October 1993, vol. 50 (3), 151-62
- **Dierks T ; Jelic V ; Pascual-Marqui RD ; Wahlund L ; Julin P ; Linden DE ; Maurer K ; Winblad B ; Nordberg A.** Spatial pattern of cerebral glucose metabolism (PET) correlates with localization of intracerebral EEG-generators in Alzheimer's disease. *Clin Neurophysiol.,* October 2000, vol. 111 (10), 1817-24
- **Moretti DV ; Babiloni F ; Carducci F ; Cincotti F ; Remondini E ; Rossini PM ; Salinari S ; Babiloni C.** Computerized processing of EEG-EOG-EMG artifacts for multi-centric studies in EEG oscillations and event-related potentials. *Int J Psychophysiol.,* March 2003, vol. 47 (3), 199-216
- **Buscema M. ; Grossi E. ; Intraligi M. ; Garbagna N. ; Andriulli A. ; Breda M.** An optimized experimental protocol based on neuro-evolutionary algorithms.[..]. *Artificial Intelligence in Medicine,* 2005, vol. 34, 279-305
- Reti Neurali Artificiali e Sistemi sociali Complessi. Teoria e Modelli. Massimo Buscema e Semeion Group, 1999, vol. I